# NEW EUROPEAN PATENT SPECIFICATION

(11) **EP 0 227 124 B2**
(45) Date of publication and mention of the opposition decision: **31.01.1996**
(45) Mention of the grant of the patent: 04.03.1992
(21) Application number: 86201635.9
(22) Date of filing: 23.09.1986
(51) Int. Cl.: C08F 12/32, C08F 291/02, C08F 212/32, C08F 297/02

(54) **Olefinic benzocyclobutene polymers and processes for the preparation thereof**
Olefinische Benzocyclobuten-Polymere und Verfahren zu deren Herstellung
Polymères oléfiniques de benzocyclobutène et procédés pour leur préparation

(30) Priority: 23.12.1985 US 812207; 23.12.1985 US 812421; 23.12.1985 US 812423; 23.12.1985 US 812424; 23.12.1985 US 812431; 28.03.1986 US 846315
(43) Date of publication of application: 01.07.1987
(73) Proprietor: SHELL INTERNATIONALE RESEARCH MAATSCHAPPIJ B.V., NL-2596 HR Den Haag (NL)
(72) Inventor: Wong, Pui Kwan, Katy Texas 77450 (US)

(56) References cited:
- WO-A-87/01376
- WO-A-87/01383
- US-A- 3 366 616
- US-A- 4 540 763

## Description

The invention relates to polymers of a benzocyclobutene and to processes for the preparation thereof. More particularly, this invention relates to polymers of certain olefinic benzocyclobutene monomers. Furthermore, the invention relates to a benzocyclobutene derivative.

The polymerization of α-monoolefins to useful thermoplastic polymers by catalysis employing coordination catalysts is well known. Generally, the coordination catalyst comprise at least two compounds, one being a compound of a transition metal of groups 4 to 8 of the Periodic Table of the Elements, referred to herein as "procatalyst" and the other being an organometallic compound of a metal of groups 1 to 3 of the Periodic Table of the Elements, referred to herein as "cocatalyst". Such coordination catalyst systems are often referred to as Ziegler catalysts. A group of these catalysts which is stereoregulating in the production of polymers of propylene and higher α-monoolefins is often referred to as Ziegler-Natta catalysts. In commercial Ziegler-Natta catalysts, the procatalyst is generally an active form of titanium chloride and the cocatalyst an alkyl compound of aluminium or an alkyl halide compound of aluminium. These catalysts may be further modified by addition of compounds which increase the stereoregulating effect of the catalysts, referred to herein as selectivity control agents.

Polymers of ethylene, propylene, 1-butene and 4-methyl-1-pentene produced by means of such coordination catalysts are materials of commerce, both as homopolymers and copolymers. A novel alphamonoolefin polymer has now been found.

The invention provides a polymer of a benzocyclobutene of the general formula (I): 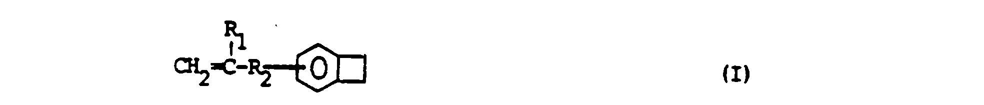 where R₁ represents a hydrogen atom or a methyl group and R₂ a 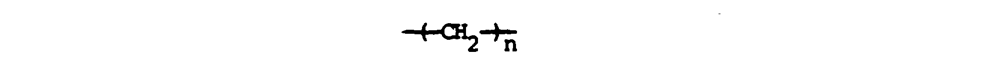 group where n is 0 or an integer from 1 to 6.

The polymers according to the present invention are not substituted at the cyclobutene ring. According to a preferred embodiment they are solid homopolymers.

Further, the invention provides a process for the preparation of a polymer of a benzocyclobutene, which process comprises homopolymerizing a benzocyclobutene of the general formula (I): 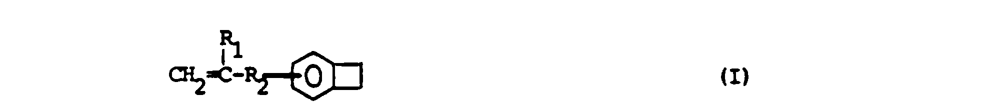 where R₁ represents a hydrogen atom or a methyl group and R₂ a 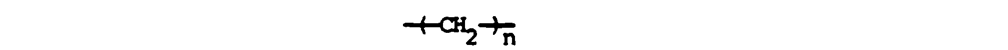 group where n is 0 or an integer from 1 to 6, in the presence of a polyolefin coordination catalyst.

The homopolymers according to the present invention are very reactive at elevated temperature above about 200 °C. Such a polymer may be crosslinked and employed as a plastic in typical plastics operations such as in making extruded or moulded products. Alternatively, such a polymer may be functionalized, for example with maleic anhydride, and employed as a polymer blend component, for example with nylons. Fundamentally, nylons are condensation products of hexamethylene diamine and adipic acid. Further, such polymer can be an important intermediate that may be used as a matrix with other polymerizable momomers.

One key aspect of the present invention involves the homopolymerization of the benzocyclobutene monomer of the general formula I and the resulting polymer. Preferably, R₁ represents a hydrogen atom and n is 0, 1 or 2. Preferred homopolymers are:-

| Monomer | Hereinafter also referred to as |
|---|---|
| 4-(3-butenyl)benzocyclobutene | 4BBC |
| 3-(3-butenyl)benzocyclobutene | 3BBC |
| 4-allylbenzocyclobutene | 4ABC |
| 3-allylbenzocyclobutene | 3ABC |
| 4-vinylbenzocyclobutene | 4VBC |
| 3-vinylbenzocyclobutene | 3VBC |
| 4-isopropenylbenzocyclobutene | 4IBC |
| 3-isopropenylbenzocyclobutene | 3IBC |

According to another embodiment the present invention provides a solid copolymer of a benzocyclobutene of the general formula I and of:-
(a) a C₂-C₈ alphamonoolefin,
(b) a monoalkenyl arene and which copolymer is a random copolymer, or
(c) a monoalkenyl arene and which copolymer is an AB block copolymer, ABA block copolymer, 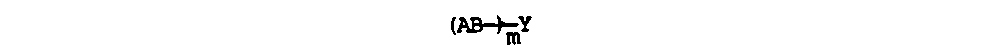 block copolymer, 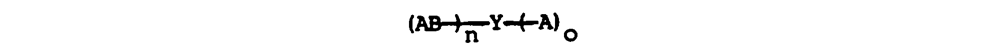 block copolymer or an 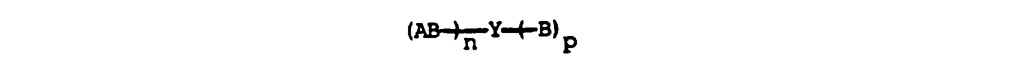 block copolymer or a mixture thereof where each "A" represents a copolymer block of a monoalkenyl arene monomer and a benzocyclobutene of the general formula I in which n is zero, each "B" represents a polymerized conjugated diene hydrocarbon block or a substantially completely hydrogenated conjugated diene polymer block and each of "m", "n", "o" and "p" is an integer in the range of from 1 to 30 and "Y" represents the residue of a multifunctional coupling agent or multifunctional initiator.

The known crystalline olefin polymers, in their usual form, have some outstanding good properties and some undesirable ones. For example, desirable properties of highly crystalline polypropylene are high tensile strength and substantial hardness. One disadvantage of the usual forms of highly crystalline polypropylene is poor creep resistance. Poor creep resistance means that such polymers are deficient for dimension stability. One means of improving creep resistance is to crosslink the polymer by peroxide. However, such crosslinking is useful only for ethylene polymers, and not propylene polymers, 1-butene polymers etc. Still further, such crosslinking techniques are also not desirable because of premature crosslinking, bubble formation.

The solid crystalline copolymers of a benzocyclobutene of the general formula I and a C₂-C₈-alphamonoolefin and which have been mentioned hereinbefore possess a unique balance of properties along with a unique curing or crosslinking approach.

The present invention also provides a process for the preparation of a solid copolymer, said process comprising copolymerizing a C₂-C₈ alphamonoolefin and a benzocyclobutene of the general formula (I) 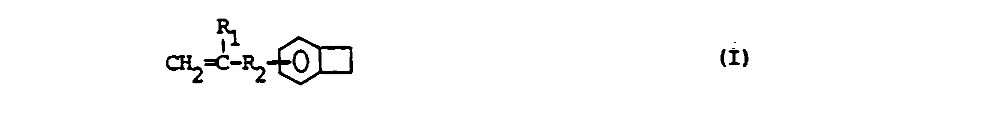 where R₁ represents a hydrogen atom or a methyl group and R₂ a 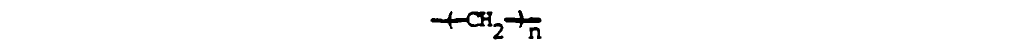 group where n is 0 or an integer from 1 to 6, in the presence of a polyolefin coordination catalyst.

Peroxide crosslinking of polyethylene gives useful products such as cable insulations, foams, abrasion resistant profiles, coatings and bearings. These products can be prepared by a variety of processes such as extrusion, injection moulding and sintering. Some of the problems existing in the peroxide curing of polyethylene are generation of bubbles from peroxide decomposition; interference of crosslinking reactions by some stabilizer additives which are radical scavengers; and the inability to prevent curing at temperatures below 170 °C limits some of the processing techniques to the lower melting LDPE only.

Peroxide crosslinking of substituted polyolefins are generally not feasible because hydrogen abstraction takes place preferentially at the tertiary carbons to give polymeric radicals which preferentially undergo β-scission than recombination. 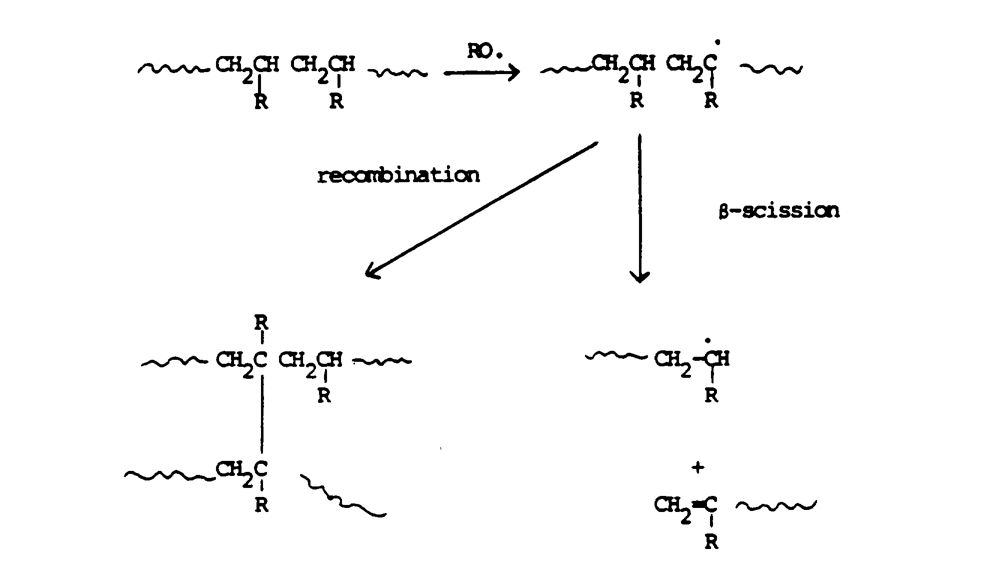 The present invention provides the following advantages over peroxide crosslinking:-
1. It can be applied to substituted polyolefins such as polypropylene and poly(4-methyl-1-pentene).
2. It is not affected by stabilizers which are radical scavengers.
3. It eliminates mixing problems.
4. It eliminates the problem of bubble formation.
5. It can be applied to PE in processes which require no premature crosslinking at temperatures below 170 °C.

This invention is suitable for the homo- and co-polymerization of C₂-C₈ alpha-monoolefins. Such olefins include ethylene, propylene, 1-butene, 4-methyl-1-pentene, 1-hexene, 1-heptene, 1-octene and mixtures thereof. Preferred olefins include ethylene, propylene, 1-butene and 4-methyl-1-pentene and mixtures of ethylene and propylene with propylene being the most preferred alpha-monoolefin monomer.

A key aspect of the present invention involves the incorporation of the benzocyclobutene monomer of the general formula I in the polymerization process and the product. Preferred are copolymers of a C₂-C₈ alphamonoolefin and of:-

### Monomer

4-(3-butenyl)benzocyclobutene,
3-(3-butenyl)benzocyclobutene,
4-vinylbenzocyclobutene,
3-vinylbenzocyclobutene,
4-allylbenzocyclobutene,
3-allylbenzocyclobutene,
4-isopropenylbenzocyclobutene, or
3-isopropenylbenzocyclobutene.
Of the above, the first six are preferred with 4BBC being most preferred.

The relative amount of olefinic benzocyclobutene monomer of the general formula I depends upon the degree of "crosslinking" ultimately desired. The following table shows the preferred ranges in mol per cent:

| | Preferred | More Preferred |
|---|---|---|
| Alphamonoolefin monomer | 99.99 to 85 | 99.9 to 95 |
| Olefinic benzocyclobutene monomer | 0.01 to 15 | 0.1 to 5 |
| TOTAL | 100% | 100% |

According to a further embodiment the present invention provides a solid substantially amorphous copolymer of a benzocyclobutene of the general formula I, ethylene and propylene.

Coordination catalysts are used to copolymerize ethylene with many other α-olefins to prepare high molecular weight, linear, substantially crystalline polymers. When mixtures of olefins are polymerized with certain of these coordination catalysts, e.g. VOCl₃ and diethylaluminium chloride, preferably triethyldialuminiumtrichloride, amorphous, elastomeric polymers are formed. Those copolymers made from ethylene and propylene have found wide interest and commercial usefulness. These ethylene-propylene copolymers (termed "EPR") are saturated and, thus, cannot be sulphur-cured but require a peroxide or other special cure. Random EPR's typically contain about 30 to 70 per cent weight ethylene.

EPR's are desirable rubbers because these are prepared from low-cost monomers and have good mechanical and elastic properties, as well as outstanding resistance to ozone, heat and chemical attack. One disadvantage of such polymers is their poor creep resistance. Poor creep resistance means that such polymers are deficient for applications under load. One means of improving creep resistance of EPR's is to crosslink the polymer with peroxides. However, such crosslinking is not without its associated problems such as unpleasant odours and difficult curing procedures, interference by certain stabilizers which are radical inhibitors, and removal of peroxide decomposition products.

The solid substantially amorphous copolymer mentioned hereinbefore does not need to be crosslinked with peroxides, since it possesses its own unique crosslinking capability.

Further, the present invention also provides a process for the preparation of such a solid, amorphous polymer, said process comprising copolymerizing ethylene, propylene and an olefinic benzocyclobutene monomer of the general formula I described herinbefore in the presence of a polyolefin coordination catalyst.

The incorporation of latent curing sites into the amorphous copolymers according to the invention eliminates difficult blending procedures and unpleasant odours. The cured rubber would contain no residual unsaturation and thus should be more resistant to oxidative and thermal degradation, as explained by H.J. Harwood in J. Testing and Evaluation, 289 (1983).

The amorphous copolymers of the present invention may be used to replace commercial EPR's in whole or in part, and are useful in the standard uses of EPR, such as moulded and extruded goods (e.g. hose, gaskets and belts. See generally, Elastomers, Synthetic, Kirk-Othmer Encyclopedia of Chemical Technology, Volume 7, pages 686-692 (Interscience Publishers 1965).

The relative amount of benzocyclobutene of the general formula I in the amorphous copolymer according to the invention depends upon the degree of "crosslinking" ultimately desired. The following table shows the preferred ranges (in mol per cent in the product):

| | Preferred | More Preferred |
|---|---|---|
| Ethylene monomer | 20 to 80 | 40 to 75 |
| Propylene monomer | 80 to 20 | 60 to 30 |
| Olefinic benzocyclobutene monomer | 0.1 to 20 | 0.1 to 10 |
| TOTAL | 100% | 100% |

The amorphous copolymers of the present invention have a random structure and number average molecular weight of about 50,000 to about 300,000.

As shown in Example 1 hereinafter, the thermal electrocyclic ring-opening of such benzocyclobutene monomers is the key to their particular usefulness in the present invention. Such monomers should have very good stability up to at least 100 °C (t_{½} = 12 years at 100 °C for benzocyclobutene) and high reactivity at elevated temperature (t_{½} = 1.5 minutes at 250 °C for benzocyclobutene).

A number of different coordination catalysts of the Ziegler-Natta type are useful in the process of this invention. Broadly, such catalysts comprise a pro-catalyst which is a solid compound of a transition metal of group 4 to 8 of the Periodic Table of the Elements and a cocatalyst which is an alkyl compound, including alkyl halides and alkyl hydrides, of a metal of groups 1 to 3. It is now well known that only a limited number of these compounds are practical for effectively converting a given monomer into a desired polymer. In general, the same catalysts which are effective for the polymerization of a particular monomer feed in a conventional polymerization process are also effective for the same conversion in the process of the present invention.

Ziegler-Natta coordination catalysts are discussed in detail in the book "Ziegler-Natta Catalysts and Polymerizations" by John Boor, Jr., Academic Press, 1979 and in numerous patent specifications and review articles, including those cited by Boor.

More recently, catalysts having much higher activity have been developed both for polymerization of ethylene to linear high density polyethylene and for the stereoregular polymerization of higher-α-monoolefins. The most active of these catalysts comprise procatalysts composites of magnesium or manganese halide, titanium halide and, in the case of stereoregulating catalysts, an electron donor. The cocatalysts generally are aluminium trialkyls and, in the case of a stereoregulating catalyst, a selectivity control agent. Such catalysts are described, for example, in U.S. patent specifications 4,113,654 and 4,265,785 and many other patent specifications for ethylene polymerization and in U.S patent specifications 4,107,413 and 4,329,253 and European patent specifications 19,330 and 29,623 and many others for stereospecific polymerization of α-monoolefins.

Suitable procatalysts for conversion of propylene and other α-monoolefins to isotactic polymers (which catalysts are useful herein) are violet TlCl₃ and composites of titanium chloride, magnesium chloride and an electron donor. Procatalysts of the type of violet TiCl₃ are preferably employed with alkyl aluminium halides, typically diethyl aluminium chloride (DEAC), as cocatalyst. Procatalysts of the type of composite of titanium halide, magnesium halide and electron donor are preferably employed with trialkylaluminium, typically triethylaluminium (TEA) as cocatalyst, and with an aromatic ester electron donor, such as ethyl p-methoxybenzoate (p-ethyl anisate) or p-methyl toluate as selectivity control agent.

Other catalysts may also be employed including halides or alkoxyhalides of a transition metal such as zirconium, vanadium, chromium and molybdenum. In the active catalyst the transition metal is at a valence below its maximum. Among the halogens the order of preference runs from chlorides to bromides to iodides to fluorides.

Preferred catalysts for the preparation of the amorphous copolymers according to the invention include halides or alkoxyhalides of a transition metal such as zirconium, vanadium, chromium and molybdenum. In the active catalyst the transition metal is at a valence below its maximum. Among the halogens the order of preference runs from chlorides to bromides to iodides to fluorides.

Preferred catalysts are VOCI₃ and diethylaluminium chloride. See generally U.S. patent specifications 3,000,866, 3,063,973 and 3,093,621 for suitable catalysts and reaction conditions.

The benzocyclobutene monomer of the general formula I is homopolymerized or copolymerized with a C₂-C₈ alpha-monoolefin, for example with a mixture of ethylene and propylene, in a manner similar or identical to that used in the polymerization and copolymerization of alpha-monoolefin monomers. These polymerizations may be carried out by any one of the conventional techniques, such as gas phase polymerization or slurry polymerization using liquid monomer or an inert hydrocarbon diluent as liquid medium. Hydrogen may be used to control the molecular weight of the polymer without detriment to the performance or the stereospecific performance of the catalyst compositions. Polymerization may be effected batchwise or continuously with constant or intermittent supply of the catalyst to the polymerization reactor or reactors.

Polymerization, as well as catalyst preparation, is carried out in the Absence of air and water or in the presence of only very limited amounts of these, since otherwise the catalyst would be deactivated. Desired polymerization temperatures are between 20 °C and 100 °C, preferably between 40 °C and 80 °C.

The catalysts employed in the production of the subject homopolymers and copolymers may be of sufficiently high activity that no product deashing step is required. If catalyst residues are to be deactivated and removed, this may be accomplished by conventional means employed in cleanup of olefin polymers produced over such catalysts, for example, by contact with an alcohol, followed by extraction with water.

Said copolymers of a benzocyclobutene and a C₂-C₈ alphamonoolefin may be crosslinked at temperatures above about 200 °C.

Over the years a large number and variety of important polymers have been developed with styrene monomers. Amorphous homopolymers of styrene prepared via free-radical polymerization are still the most important polymers. Subsequently other forms of polystyrene have been prepared. These include Ziegler-Natta isotactic crystalline polystyrene and anionic polystyrene with an M_{w}/Mₙ in the range of 1.05-1.10 with controlled molecular weight. Alkylated styrenes, such as alphamethylstyrene and paramethylstyrene have also been of interest for certain end uses. See, for example, "Styrene Plastics", Kirk-Othmer Encyclopedia of Chemical Technology, Volume 19, pages 85-134 (Interscience Publishers, 1969).

It has long been known that the brittle nature of polystyrene can be overcome by incorporating a minor amount of rubber. The rubber is largely incompatible with the polymeric vinyl compounds resulting in a two-phase system comprising a dispersed rubbery phase and a poly(monovinyl aromatic) matrix. See, for example, U.S. patent specification 4,309,515. These graft copolymers are commonly termed high impact polystryrene or HIPS.

Acrylonitrile copolymers with styrene (SAN) are another large group of styrene polymers. These copolymers are transparent, and, in comparison to polystyrene, more solvent- and craze-resistant and relatively tough. They also constitute the rigid matrix phase of the ABS (acrylonitrile-butadiene-styrene) copolymers which are of common usage.

Styrene has long been copolymerized with butadiene to form both rubbers (SBR) and toughened plastics.

Other copolymers with styrene include α-methylstyrene copolymers, p-methylstyrene copolymer (see e.g. U.S. patent specification 4,230,836), methyl methacrylate copolymer, maleic anhydride copolymer and many more.

The solid random copolymers of a benzocyclobutene of the general formula I and a monoalkenylarene described hereinbefore constitute a new set of polymers having improved properties. Said copolymers of a benzocyclobutene of the general formula I and a monoalkenylarene are prepared by polymerizing a monoalkenylarene and a benzocyclobutene of the general formula I in the presence of a catalyst at a temperature in the range of from -80 °C to +150 °C. Said copolymer preferably has a content of the benzocyclobutene of the general formula I in the range of from 0.01 mol per cent to 10 mol per cent.

Said random copolymers of a benzocyclobutene and a monoalkenylarene, according to the present invention, may be crosslinked at elevated temperatures (above about 200 °C) resulting in improved solvent resistance (insolubility in certain solvents) and a higher glass transition temperature (Tg). Further, these polymers of the present invention may be functionalized via a Diels-Alder reaction, resulting in polymers having improved interfacial adhesion.

The monoalkenyl arene or monovinyl aromatic compounds are those having the vinyl radical, i.e. ethylenically unsaturated radical, attached directly to a carbon atom of the aromatic nucleus.

Styrene is the preferred monovinyl aromatic compound. Examples of other compounds applicable herein are the alkyl and dialkyl derivatives of styrene such as the dimethylstyrenes, α-methylstyrene p-methylstyrene, ethylstyrenes, isopropylstyrenes, butyl-styrenes, etc., the halogen derivatives of styrene, for example, chloro- and dichlorostyrenes and the mono- and dibromostyrenes and alkylhalostyrenes as well as mixtures of these compounds with styrene or with each other. Alphamethylstyrene may be substituted in a minor amount, for example 2 to 30% by weight, preferably from about 5 to 25% in the total composition for a portion of the monovinylaromatic monomer to improve properties of the interpolymers such as heat distortion temperature.

Preferred are copolymers of a monoalkenyl arene and of a benzocyclobutene of the general formula I, wherein n is preferably 0,1 or 2, preferably with :
4-(3-butenyl)benzocyclobutene, which is most preferred, 3-(3-butenyl)benzocyclobutene, 4-allylben-zocyclobutene, 3-allylbenzocyclobutene, 4-vinylbenzocyclobutene and 3-vinylbenzocyclobutene.

The mixture of the monoalkenyl arene monomer and benzocyclobutene monomer may be polymerized by themselves or with other copolymerizable monomers. In general the polymerization conditions appropriate to styrene will be appropriate herein, as long as the polymerization temperature is maintained below 150 C (in order not to prematurely "activate" the benzocyclobutene monomer). Thus, polymerization may be effected under bulk conditions or in solution, suspensibn or emulsion techniques comparable to those used for styrene polymerisation. The polymerization catalysts may be of the free radical or anionic types. Suitable free radical initiators include di-tertiary butyl peroxide, azobis(isobutyronitrile), di-benzoyl peroxide, tertiary butyl perbenzoate, di-cumyl peroxide and potassium persulphate. Anionic initiators are generally of the formula RMy where R is organo, mono- or polyvalent and may be alkyl, alkenyl, aryl, aralkyl, and alkaryl, and may contain from 1 to about 50 carbon atoms; and y is 1 to 4, and preferably 1 or 2. Such initiators as methyl lithium, ethyl lithium, methyl sodium, propyl lithium, n-butyl lithium, sec-butyl lithium, tert-butyl lithium, butyl sodium, lithium naphthalene, sodium naphthalene, potassium naphthalene, cesium naphthalene, phenyl sodium, phenyl lithium, benzyl lithium, cumyl sodium, cumyl potassium, methyl potassium, ethyl potassium, and so forth may be used in this reaction. Branched chain polymers may be obtained by using multifunctional initiators, for example, 1,3,5-trilithiocyclohexane and 1,4,7,10-tetrapotassiodecane. In the anionic polymerization each molecule of the initiator starts one anionic polymer chain; multiple anions can permit addition of secondary chains to the main chain. Stereospecific catalysts can also be used to advantage. Such catalysts are generally of the well known Ziegler type, comprising a transition metal of Group 4A, 5A, 6A, or 7, in a valence state lower than its maximum in combination with an organometallic compound of Group 2 or 3.

Among the reducible transitional metal compounds suitable for the purposes of this invention are the heavy metal, inorganic compounds such as halide, oxyhalides, complex halides, hydroxides, and organic compounds such as alcoholates, acetates, benzoates, and acetyl acetonates, of the requisite metals. Such metals include titanium, zirconium, hafnium, thorium, uranium, vanadium, niobium, tantalum, chromium, molybdenum, tungsten and iron. The metal halides, particularly the chlorides are generally preferred. Titanium, zirconium, and vanadium, are the most active metals. The following heavy metal compounds are readily reducible: titanium tetrachloride, titanium tetrabromide, zirconium tetrachloride, vanadium tetrachloride, and zirconium acetylacetonate.

The reduction may be effected in any suitable manner, for example, by reduction with hydrogen or aluminium. Titanium tetrachloride can be readily reduced to titanium trichloride by reduction with hydrogen, aluminium or titanium metal. Suitable reduction methods are well known in the art and are described, for example, in U.S. patent specification No. 3,362,940

The other component of the Ziegler catalyst system is at least one organometallic compound of a metal of Groups 2 or 3. These compounds will have at least one hydrocarbon radical, i.e., alkyl, cycloalkyl, aralkyl, alkaryl, or aryl, attached to the metal through a carbon atom. The other substituents in the organometallic compound can be hydrocarbon radicals, halogen radicals, alkoxy, amino, hydrogen, or combinations thereof. Non-limiting examples of the organometallic compounds are triethylaluminium, tripropylaluminium, dipropylzinc, triisobutylaluminium, diethylmagnesium, diphenylaluminium chloride, cyclohexyl-ethylzinc, diethylaluminium bromide, diethylaluminium chloride, diethylaluminium iodide, ethylzinc chloride, propyl-magnesium chloride, dipropylaluminium chloride, dioctylaluminium chloride, diisobutylaluminium hydride, phenylaluminium dihydride, cyclohexylbromoaluminium hydride, dipropylaluminium hydride, propyl zinc hydride, ethylmagnesium hydride, and methoxyaluminium diethyl. Mixtures of two or more organometallic compounds can be used.

The catalyst can be formed by methods well known in the art. Thus, for example, it can be made by charging the components separately to the polymerization zone or they may be combined immediately prior to entry into the zone.

As previously mentioned, the polymerization may be carried out in bulk, in solution, in suspension or in emulsion. Solution polymerization will generally employ inert hydrocarbon solvents such as toluene, benzene, cyclohexane, or ethyl toluene. Suspension polymerization is generally carried out in an aqueous medium comprising water and suspending agents such as calcium phosphates, polyvinyl alcohol, hydroxyethyl cellulose or sodium polyacrylates. Suitable suspension polymerization techniques will be comparable to those used with styrene monomer, which are well known in the art and described, for example, in U.S. patent specification No. 2,715,118. Emulsion techniques also will be comparable to those used for styrene, using an aqueous medium with the addition of suitable surfactants. Catalysts will normally be of the free-radical type, for example, a combination of butyl peroxide and tertiary butyl perbenzoate.

The polymerization conditions will generally be similar to those used for styrene. Thus, temperatures will generally be in the range of -80 ° to +150 °C, preferably 0 °C to 150 °C.

The polymerizable mixture may also be copolymerized with other monomers. The conditions for the copolymerization will, in general, be similar to those used for polymerizing the mixture by itselfs and for copolymerizing styrene. Thus, initiators, temperatures, pressures, solvents, and recovery processes will be similar to those previously described. The types of copolymer produced may include random and graft copolymers. The preparative procedures will be those appropriate to the type of copolymer in question. In general the monoalkenyl arene content will be above 60% weight for such copolymers.

Random copolymers may be made with a wide range of comonomers including other vinyl monomers such as alpha-methyl styrene, acrylates including methyl acrylate, ethyl acrylate, methacrylates including methyl methacrylate, acrylonitrile, olefins especially diolefins such as butadiene, isoprene, chloroprene and mono olefins such as ethylene and propylene.

One class of random copolymers are the random copolymers with butadiene. They may be produced by methods similar to those used in the manufacture of GR-S synthetic rubber as described, for example, in "Synthetic Rubber", Ed. Whitby et al, John Wiley, N.Y., 1954.

The copolymers with acrylonitrile are another class of copolymers. They have a low affinity for hydrocarbons, especially as compared to the homopolymer. The affinity for hydrocarbons can therefore by controlled by copolymerizing the monomer mixture with varying amounts of acrylonitrile. Generally, the amount of acrylonitrile will be from 15 to 35%, preferably about 30%, by weight, although lower amounts, e.g., about 10% of the comonomer will effect useful changes in the properties of the polymer.

Another class of copolymers are the high impact copolymers. These are generally graft copolymers produced by grafting units derived from the polymerizable mixture onto a backbone polymer which is generally of a rubbery nature. Suitable backbone polymers include polybutadiene, poly(dimethyl butadiene), polyisoprene, polychloroprene and other synthetic rubbers such as the styrenebutadiene rubbers (SBR), ethylene-propylene rubbers (EPR), ethylenepropylene-diene elastomers (EPDM), polyacrylates, nitrile rubbers and copolymers with other aromatic monomers including vinyl toluene. The backbone will generally comprise 2 to 25 per cent by weight of the high impact copolymer, preferably 3 to 10 per cent by weight. Normal techniques, e.g. grafting, comparable to those used for making high impact polystyrenes are useful; they are well known in the art and referred to, for example, in U.S. patent specification 2,694,692 and British patent specification 1,054,301.

A key aspect of the present invention is the amount of benzocyclobutene monomer incorporated in the polymer. The relative amounts of benzocyclobutene monomer and monoalkenyl arene monomer depend upon the desired crosslink density or functionality. The table below shows suitable ranges in mol per cent:

| | Preferred | More Preferred |
|---|---|---|
| Benzocyclobutene monomer | 0.01 to 20 | 0.1 to 10 |
| Monoalkenyl arene monomer | 99.99 to 80 | 99.9 to 90 |
| TOTAL | 100 | 100 |

Block copolymers have been developed rapidly within the recent past, the starting monomers usually being monoalkenyl arenes such as styrene or alphamethyl styrene block polymerized with conjugated dienes such as butadiene and isoprene. A typical block copolymer of this type is represented by the structure polystyrene-polybutadiene-polystyrene. When the monoalkenyl -arene blocks comprise less than about 55% by weight of the block copolymer, the product is essentially elastomeric. Moreover, due to their peculiar set of physical properties they can be referred to more properly as thermoplastic elastomers. By this is meant polymers which in the melt state are processable in ordinary thermoplastic processing equipment but in the solid state behave like chemically vulcanized rubber without chemical vulcanization having been effected. Polymers of this type are highly useful in that the vulcanization step is eliminated and, contrary to scrap from vulcanized rubbers, the scrap from the processing of thermoplastic elastomers can be recycled for further use.

These block copolymers have enjoyed broad commercial success. Nevertheless, improvements in such polymers are desired. In particular, for particular applications such polymers require greater solvent resistance and higher use temperatures. Still further, such polymers also need improved adhesion to polar materials when used in certain blend compositions. What has now been discovered is a unhydrogenated block copolymer that overcomes these deficiencies.

The oxidative stability of such block copolymers is improved by selective hydrogenation of the diene blocks without hydrogenation of the styrene blocks. Such block copolymers are described in U.S. Reissue specification 27,145 and U.S. patent specification 3,595,942.

These hydrogenated block copolymers have enjoyed broad commercial success. Nevertheless, improvement in such polymers are desired. In particular, for particular applications such particular polymers require greater solvent resistance and higher use temperature. Still further, such polymers also need improved adhesion to polar materials when used in certain blend compositions. What has now been discovered is a partially hydrogenated block copolymer that overcomes these deficiencies.

The present invention, therefore, also provides copolymers of monoalkenyl arenes and/or conjugated dienes with a benzocyclobutene derivative. In particular, the present invention provides AB block copolymers, ABA block copolymers. 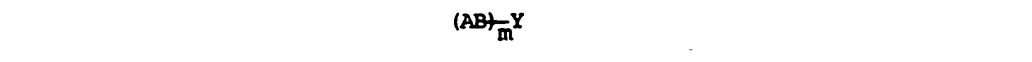 block copolymers, 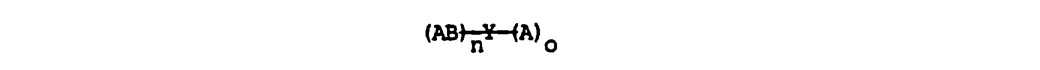 block copolymers and 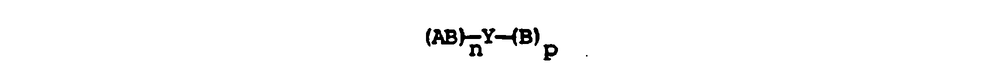 block copolymers and mixtures thereof where each "A" represents a copolymer block of a monoalkenyl arene monomer and a benzocyclobutene monomer of the general formula II 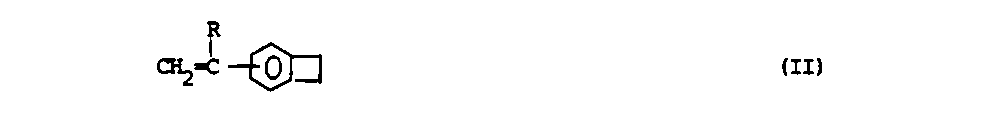 where R represents a hydrogen atom or a CH₃ group, each "B" represents a polymerized conjugated diene hydrocarbon block or a substantially completely hydrogenated conjugated diene polymer block and each of "m", "n", "o" and "p" is an integer in the range of from 1 to 30 and "Y" represents the residue of a multifunctional coupling agent or multifunctional initiator.

The invention also relates to a process for preparing such polymers.

The block copolymers of the present invention possess a number of advantages over prior art block copolymers. When the polymers of the present invention are crosslinked at elevated temperatures (above about 200 °C), the resulting polymers possess improved solvent resistance along with higher use temperatures. In addition, it is possible to functionalize such non-crosslinked polymers to obtain polymers having improved adhesion to polar materials. Still further, such hydrogenated polymers also possess improved oxidative stability.

The block copolymers of the present invention have idealized structures as follows:

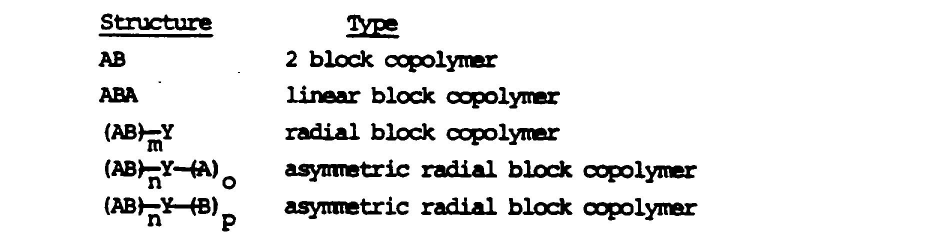

Mixtures of the above structures are also contemplated.

The "A" blocks are copolymer blocks of a monoalkenyl arene monomer and a benzocyclobutene monomer of the formula 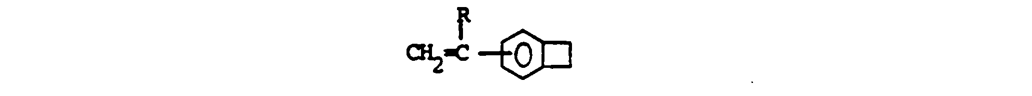 where R is H or CH₃. When R is H, the benzocyclobutene monomers are 4-vinylbenzocyclobutene or 3-vinylbenzocyclobutene. When R is CH₃, the benzocyclobutene monomers are 4-isopropenylbenzocyclobutene or 3-isopropenylbenzocyclobutene The preferred benzocyclobutene monomer is 4-vinylbenzocyclobutene. Preferably the monoalkenyl arene is styrene. Other useful monoalkenyl arenes include alphamethyl styrene, tert-butyl styrene, paramethyl styrene and the other ring alkylated styrenes as well as mixtures of the same.

The relative amounts of benzocyclobutene monomer and monoalkenyl arene monomer in the A blocks depend upon the desired functionality or degree of crosslink. The table below shows suitbable ranges in mol per cent:

| | Preferred | More Preferred |
|---|---|---|
| Benzocyclobutene monomer | 0.01 to 20 | 0.1 to 10 |
| Monoalkenyl arene monomer | 99.99 to 80 | 99.9 to 90 |
| TOTAL | 100 | 100 |

The B blocks are polymer blocks of conjugated dienes or of substantially completely hydrogenated conjugated dienes. Preferred dienes include butadiene and isoprene. A much preferred diene is butadiene. Mixtures of conjugated dienes may also be employed.

The Y moiety stands for the residue of a multifunctional coupling agent. Linear polymers (ABA) are formed by employing coupling agents having two reactive sites or by sequential polymerization. One type of coupling agent employed in the forming linear polymers is a dihalo alkane such as dibromoethane. See British patent specification 1,014,999. Another coupling agent employed in making linear polymers is phenyl benzoate as disclosed in U.S. patent specification 3,766,301. Radial polymers are formed by employing coupling agents having more than two reactive sites. Examples of such coupling agents include among others: SiCl₄--U.S. patent specification 3,244,664; Polyepoxides, polyisocyanates, polyimines, polyaldehydes, polyketones, polyanhydrides, polyesters, polyhalides--U.S. patent specification 3,281,383; Diesters--U.S. patent specification 3,594,452; Methoxy silanes--U.S. patent specification 3,880,954; Divinyl benzene--U.S. patent specification 3,985,830; 1,3,5-benzenetricarboxylic acid trichloride--U.S. patent specification 4,104,332; and glycidoxy-methoxy silanes--U.S. patent specification 4,185,042.

The linear and radial block polymers may also be formed by sequential polymerization using multi-functional initiators having at least 2 reactive carbon-lithium bonds. The dilithium initiators are represented by the formula LiRLi. Examples of these dilithium initiators are 1,1,6,6-tetraphenyl-1,5-hexadiene, 1,3-divinylbenzene, 1,3-bis(1 methylvinyl)benzene, 1,4-bis(2-phenylvinyl)benzene, 1,3-bis(1-phenylvinyl)-benzene, 1,4-bis(1-phenylvinyl)benzene, 4,4-bis(1-phenylvinyl)biphenyl, 2,7-diphenyl-1,7-octadiene, 2,7-di-4-tolyl-1,7-octadiene, 1,2-bis(4-(1-phenylvinyl)phenyl)-ethane, and 1,4-bis(4-(1-phenylvinyl)phenyl)butane. Initiators with more than two lithium-carbon bonds can be formed by the reaction of RLi and DVB.

The letters "m", "n", "o" and "p" stand for the relative number of arms in each polymer molecule. Accordingly, m, n, o and p are integers when referring to a single polymer molecule. However, a polymer mass will generally contain molecules of varying functionality. When referring to the polymer 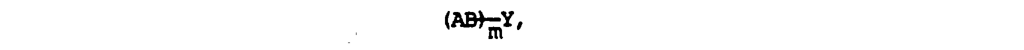 it is preferred that m be 1 to 15, preferable 2 to 8. When referring to the polymers 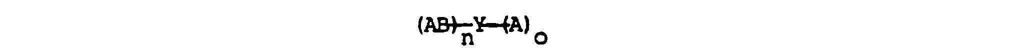 and 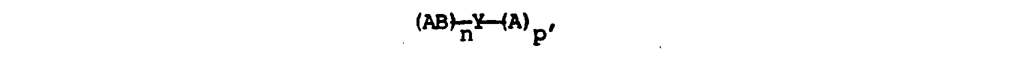 it is preferred that the sum of n + o be greater than 3, preferably 3 to 15 and that the sum of n + p be greater than 3, preferably 3 to 15. Accordingly n is preferably 2 to 8 for both polymers.

The block copolymers of the present invention are produced by anionic polymerization employing an organomonolithium initiator. (The following description refers only to mono-lithium initiators, though it is appreciated, as stated above, that multi-functional initiators may also be used.) The first step of the process involves contacting the monoalkenyl arene monomer, benzocyclobutene monomer and the organomonolithium compound (initiator) in the presence of an inert diluent therein forming a living polymer compound having the simplified structure A-Li. The monoalkenyl arene is preferably styrene. -The inert diluent may be an aromatic or naphtenic hydrocarbon, e.g., benzene or cyclohexane, which may be modified by the presence of an alkene or alkane such as pentenes or pentanes. Specific examples of suitable diluents include n-pentane, n-hexane, 2,2,4-trimethylpentane, cyclohexane, toluene, benzene, xylene and the like. The organomonolithium compounds (initiators) that are reacted with the polymerizable additive in step one of this invention are represented by the formula R¹Li; wherein R¹ is an aliphatic, cycloaliphatic, or aromatic radical, or combinations thereof, preferably containing from 2 to 20 carbon atoms per molecule. Exemplary of these organomonolithium compounds are ethyllithium, n-propyllithium, isopropyllithium, n-butyllithium, sec-butyllithium, tertoctyllithium, n-decyllithium, n-eicosyllithium, phenyllithium, 2-naphthyllitium, 4-butylphenyllithium, 4-tolyllithium, 4-phenylbutyllithium, cyclohexyllithium, 3,5-di-n-heptylcyclohexyllithium, 4-cyclopentylbutyllithium. The alkyllithium compounds are preferred for employment according to this invention, especially those wherein the alkyl group contains from 3 to 10 carbon atoms. A much preferred initiator is sec-butyllithium. See U.S. patent specification 3,231,635. The concentration of the initiator can be regulated to control molecular weight. Generally, the initiator concentration is in the range of about 0.25 to 50 millimol per 100 g of monomer although both higher and lower initiator levels can be used if desired. The required initiator level frequently depends upon the solubility of the initiator in the hydrocarbon diluent. These polymerization reactions are usually carried out at a temperature in the range of -75 ° to + 150 °C and at pressures which are sufficient to maintain the reaction mixture in the liquid phase.

Next, the living polymer in solution is contacted with a conjugated diene. Preferred dienes include butadiene and isoprene. A much preferred diene is butadiene. The resulting living polymer has a simplified structure A--B--Li. The predominantly cis-1,4 microstructure of the polybutadiene blocks obtained from polymerization in cyclohexane can be modified to a random mixture of 1,4-and 1,2-structures by the addition of a small amount of ether modifiers such as diethyl ether or tetrahydrofuran.

The B-Li polymer arms may be formed in a separate reactor employing an inert solvent, organomonolithium initiator and conjugated diene monomer. In an attenuative embodiment, the B-Li arms may be formed in the same reactor as the AB-Li polymer arms. In that case, after the A-Li arms are formed, additional initiator is added. Then the conjugated diene monomer is added. In this alternative embodiment, the B arms and the B portion of the AB arms will necessarily be similar in composition and molecular weight.

The molecular weights of the living polymer arms (A and B) may vary between wide limits. Suitable number average molecular weights are:

| | Preferred | More Preferred |
|---|---|---|
| A | 300 to 30,000 | 3,000 to 20,000 |
| B | 15,000 to 100,000 | 25,000 to 60,000 |

The living AB-Li and B-Li or A-Li polymer arms are then reacted with a multifunctional coupling agent. Exemplary coupling agents are listed above. The AB and ABA polymers do not require use of coupling agents.

The coupling agent should be added to the living polymer after the polymerization of the monomers is substantially complete, i.e, the agent should only be added after substantially all of the monomer has been converted to living polymers.

The amount of coupling agent added depends upon the structure of the coupling agent and on the desired number of arms, and the choice is within the skill of the average polymers chemist.

The coupling reaction step may be carried out in the same solvent as for the polymerization reaction step. A list of suitable solvents is given hereinbefore. The coupling reaction step temperature may also vary between wide limits, for example, from 0 to 150 °C, preferably from 20 to 120 °C. The reaction may also take place in an inert atmosphere, for example, nitrogen and under pressure, for example, a pressure of from 0.5 to 10 bar.

Hydrogenation of the block copolymers is preferably effected by use of a catalyst comprising the reaction products of an aluminium alkyl compound with nickel or cobalt carboxylates or alkoxides, preferably nickel octoate/aluminium triethyl, under such conditions as to substantially completely hydrogenate at least 80% of the aliphatic double bonds while hydrogenating no more than about 25% of the alkenyl arene aromatic double bonds. Preferred block copolymers are those where at least 99% of the aliphatic double bonds are hydrogenated while less than 5% of the aromatic double bonds are hydrogenated.

Hydrogenation temperatures must be maintained below about 150 °C, preferably between about 0 °C and about 150 °C. See generally U.S. Reissue specification 27,145 and U.S patent specification 3,595,942 show the various conditions of hydrogenation.

Then the product is typically recovered such as by coagulation utilizing hot water or steam or both. A key aspect of the block copolymers according to the present invention is that the end product contains randomly distributed benzocyclobutene structures in the styrene end blocks. A schematic structure for an ABA block copolymer is shown below, where the monoalkyl arene block is made from styrene (S) and the diene block is made from butadiene (B):

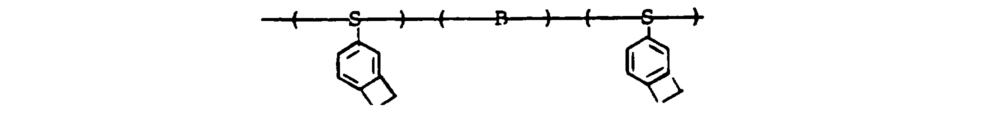

Accordingly, when such a polymer is moulded at temperatures above about 200 °C (or otherwise heated above such temperatures), a crosslinked elastomer is obtained.

4-(3-Butenyl)benzocyclobutene (4BBC) is believed to be a novel compound. This novel compound may be prepared by reacting a 4-halomethylbenzocyclobutene (halo being fluoro, chloro, bromo or iodo) with metallic magnesium and reacting the 4-halomagnesiummethylbenzocyclobutene thus formed with an allyl halide, forming 4BBC and a magnesium halide. The 4-halomethylbenzocyclobutene is preferably 4-chloromethylbenzocyclobutene and the halide is preferably allyl bromide.

The following Illustrative Experiment and Examples further illustrate the invention.

### Illustrative Experiment

A key aspect of the present invention deal with the ring-opening of the benzocyclobutene monomers to o-quinodimethanes. In this Illustrative Experiment, half-life values for the parent benzocyclobutene are calculated and summarized in the following Table 1, based on activation parameters reported in W.R. Roth et al, Chem. Ber. 111 (1978) 3892-3903. The results suggest that reactive oligomers and polymers containing benzocyclobutenes which are not substituted at the cyclobutene ring would have long shelf-life and good reactivity at 200-250 °C.

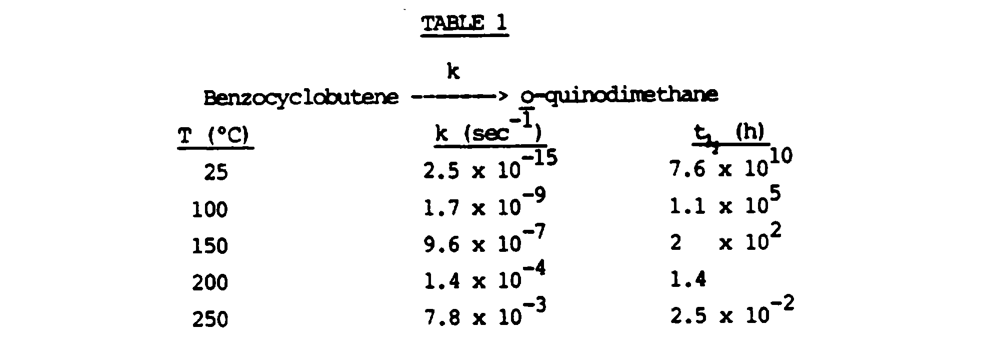

### Example 1

With the exception of polyethylene and EPDM elastomer, it is difficult to crosslink or introduce functional groups into polyolefins. By incorporating benzocyclobutene into polyolefins and using its thermal reactivity to form carbon-carbon bonds, it is possible to make new products such as crosslinkable polypropylene, thermoformable polypropylene, and high temperature ethylenepropylene elastomers. This embodiment describes the preparation of reactive polyolefins via Ziegler-Natta polymerization using 4-methyl-1-pentene (4MP1) and 4-(3-butenyl)benzocyclobutene (4BBC) as model compounds.

4BBC was prepared from 4-chloromethylbenzocyclobutene in a two-step process by reacting the latter compound with metallic magnesium, forming a substituent -CH₂MgCl and reacting this substituent with allyl bromide, forming 4BBC and MgBrCl. This two-step process had an overall yield of 60% and is represented by the following equation: 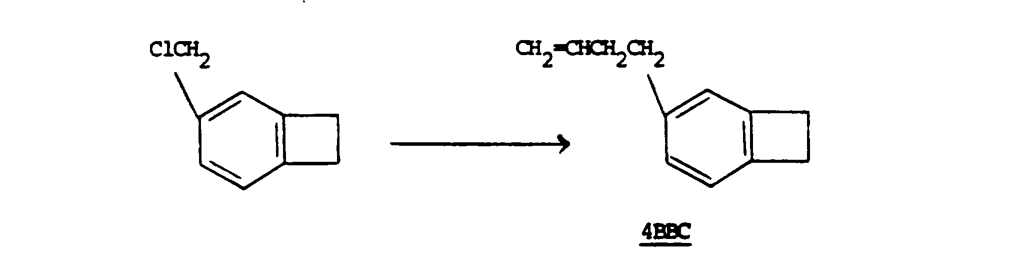 The structure of 4BBC was confirmed by ¹H and ¹³C NMR. GC analysis showed it to be >99% pure.

The homo- and copolymerizations of 4MP1 (4-methyl-1-pentene) and 4BBC were carried out in 2,2,4-trimethylpentane (isooctane) at 50 °C for 24 h using Stauffer TiCl₃.AA catalyst. The results summarized in Table 2 showed that the presence of benzocyclobutene had no deleterious effects on either polymer yields or molecular weights. The high yields of polymers regardless of monomer compositions suggest that 4BBC is not a polymerization inhibitor and should be readily copolymerizable with a wide variety of olefins. The molecular weights as measured by gel permeation chromatography (GPC) and intrinsic viscosities were high. The GPC weight-average molecular weight of a copolymer containing 6% 4BBC was estimated to be about 1.33 million using polypropylene calibration. This value is higher than those of commercial polyolefins since no molecular weight control agents was used in the polymerization.

¹³C analysis of 4BBC homopolymer shows twelve carbon resonances whose chemical shifts are consistent with the 4BBC repeating unit. This confirms that benzocyclobutene is stable under ordinary Ziegler-Natta polymerization conditions. The chemical shifts of the backbone carbons of 4BBC homopolymer are δ 31.9 and 39.4 ppm, whereas the values of corresponding carbons in the products from copolymerization are δ 32.6 and 41.6 ppm. The difference suggests that copolymerization produced random copolymers rather than block polymers or mixtures of two homopolymers. The nearly identical monomer and copolymer compositions shown in Table 2 are also consistent with a random copolymerization process. The formation of copolymer was also supported by the formation of crosslinked copolymers containing as low as 0.5 %mol of 4BBC upon compression moulding. Homopolymer of 4MP1 moulded under identical conditions remained soluble in decalin.

Copolymerization with 4BBC has been shown in this embodiment to be a feasible method of producing reactive olefins containing benzocyclobutene.

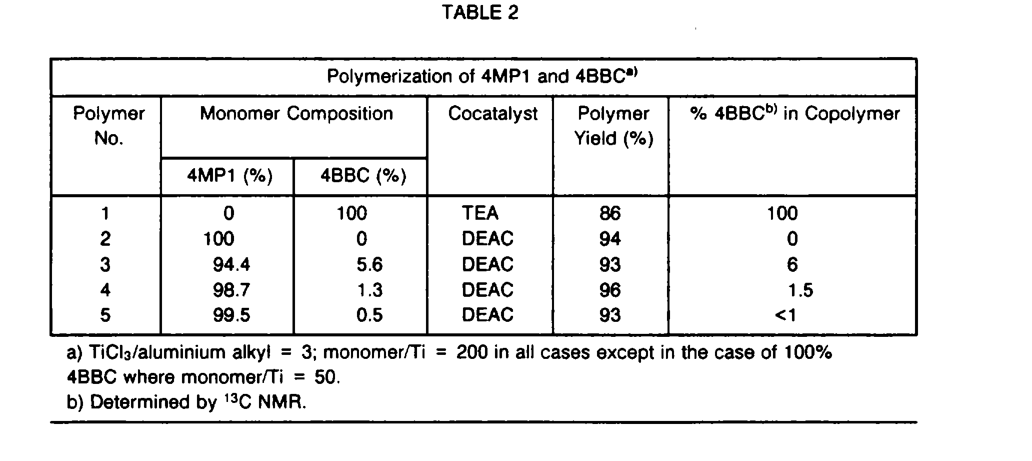

### Example 2

Isotactic poly(4-methyl-1-pentene) containing benzocyclobutene prepared by copolymerization of 4-methyl-1-pentene (4MP1) and 4-(3-butenyl)benzocyclobutene (4BBC) is discussed in this example 2.

The copolymer is crystalline and can be crosslinked by compression moulding. Since the performance of crystalline polymers are greatly affected by morphology which in tum is determined by thermal properties and history, it is important to understand how crosslinking affects the properties and structures of polyolefins. This embodiment describes the effect of crosslinking on the crystallinity, Tₘ, and T_{g} of reactive poly(4MP1).

The effect of crosslinking on the melting behaviour of a series of copolymers containing up to 5.6 %mol of 4BBC was studied by differential scanning calorimetry. The samples were heated to 300 °C, held at 300 °C for 10 min to ensure complete reaction of benzocyclobutene, quench cooled, and reheated to 300 °C. The results in Table 3 show that crosslinking caused decreases in crystallinity, ranging from about 35% reduction in 0.5% 4BBC copolymer to more than 90% in 5.6% copolymer. Control experiments showed that noncrosslinkable poly(4MP1) and a copolymer containing 4-phenyl-1-butene (4PM1) did not become less crystalline under identical heat treatment.

The differential scanning calorimetric (DSC) melting transitions of the crosslinked copolymers were broad and each polymer contained a relatively sharp and higher melting component whose Tₘₐₓ was essentially identical to that of the as prepared polymer.

Dynamic Mechanical analysis showed that crosslinking caused increases in T_{g} from 52 °C for the homopolymer to 54.5 °C for 0.5% 4BBC copolymer, 58 °C for 1.3% and 68.5 °C for 5.6%. The possibility that the increase in T_{g} was due to compositional change was eliminated by the decrease in T_{g} from 52 °C for the homopolymer to 46.5 °C for the noncrosslinked 1.3% 4PB1 copolymer.

Contrary to a styrene-divinyl benzene system, the increase in T_{g} was nonlinear with 4BBC concentration. The crosslinking efficiency, as measured by T_{g} elevation for every mmol increase in 4BBC/g polymer, decreased with increasing 4BBC concentration (Table 4). A possible explanation is that higher 4BBC concentration gives higher crosslink density which leads to higher number of isolated benzocyclobutene and consequently lower crosslink efficiency. Alternatively, the lower crosslink efficiency at higher 4BBC concentration may be the result of an opposite effect of compositional change on T_{g} since T_{g} drops from 52 °C for poly-(4MP1) to 46.5 °C for the noncrosslinked 1.3% 4PB1 copolymer.

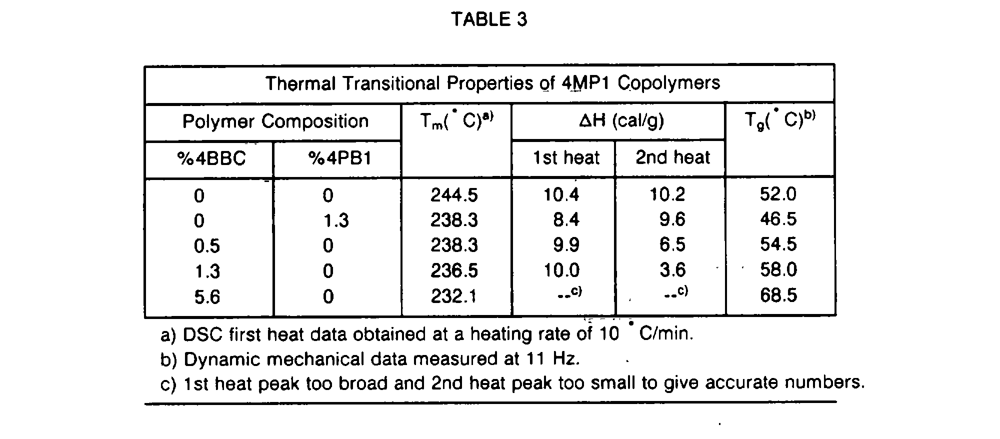

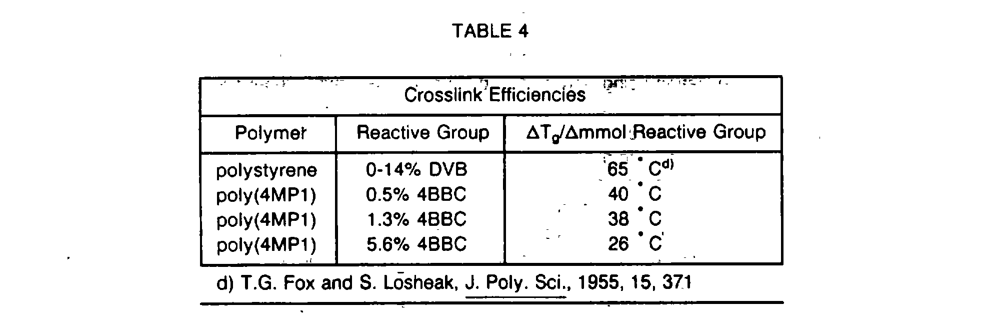

### Example 3

To determine if the BBC crosslinking process is affected by the presence of stabilizers which scavange free radicals, equivalent amounts (1 mol per BCB) of Cyanox 2246 (5.5 %w) 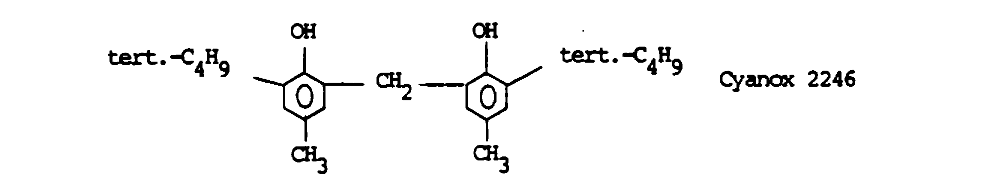 and Galvanoxyl (6.5 %w) 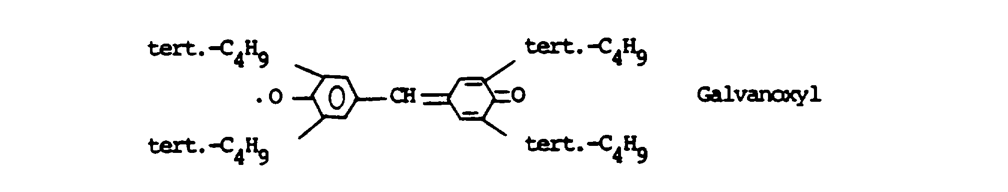 were blended with poly(4-methyl-1-pentene) (containing 1.3 %m 4BBC), respectively, and the effects of the additives were studied by extraction and DSC. Compression moulding at 250 °C gave crosslinked samples while under identical conditions P4MPI (1.3 %m 4PBI) gave soluble film. Extraction with hot 1,1,2,2-tetrachloroethane gave 95% gel in the case of Cyanox 2246 and 97% gel in the case of Galvanoxyl. DSC study showed that the presence of Cyanox 2246 had no effect on the crosslinking process as evidenced by the almost identical reduction in ΔH_{f} after crosslinking with or without Cyanox 2246.

| | ΔH_{f} (cal/g) | |
|---|---|---|
| | 1st Heat | 2nd Heat |
| P4MPI (1.3 %m 4BBC) | 9.55 | 2.27 |
| P4MPI (1.3 %m 4BBC) + 5.5 %w Cyanox 2246 | 9.43 | 2.45 |

The lack of effect by the stabilizers on crosslinking suggests the BCB crosslinking does not involve free radical intermediates as in the case of peroxide crosslinking and consequently can be used with substituted polyolefins in the presence of radical scavengers.

### Example 4

With the exception of polyethylene and EPDM elastomer, it is difficult to crosslink or introduce functional groups into polyolefins. By incorporating benzocyclobutene into polyolefins and using its thermal reactivity to form carbon-carbon bonds, it is possible to make new products such as high temperature ethylenepropylene elastomers. This embodiment describes the preparation of reactive polyolefins via Ziegler-Natta polymerization using ethylene/propylene and 4-(3-butenyl)benzocyclobutene (4BBC) as model compounds.

4BBC was prepared as described in example 1.

In a 2-litre resin kettle, 1 litre of toluene was rapidly stirred and sparged with purified nitrogen for 20 minutes at 20 °C. Streams of propylene and ethylene were introduced. Feed rates of 0.5, 1.0 and 2.0 litre/min for ethylene, propylene and nitrogen, respectively, were maintained throughout the reaction. After 20 minutes, 1 g of 4-(3-butenyl)benzocyclobutene, 0.173 g (1 mmol) of vanadium(V) trichloride oxide in 5 ml of toluene, and 2.47 g (10 mmol) of triethyldialuminium trichloride in 10 ml of toluene were added in rapid succession to give a deep purple colour solution which gradually faded to a very pale purple colour. After 10 minutes, four additional portions of 0.5 g of 4-(3-butenyl)benzocyclobutene, 0.2 mmol of vanadium(V) trichloride oxide in 1 ml of toluene, and 2 mmol of triethyldialuminium trichloride in 2 ml of toluene were added in 10-min intervals. The polymerization was allowed to proceed another 20 minutes after the final addition; then 20 ml of 2-propanol was added to deactivate the catalyst. The polymer was precipitated from methanol, washed three times in a Waring blender with methanol, and dried in vacuo at 65 °C to give 12.5 g of a rubbery polymer. ¹H NMR analysis of the polymer in 1,1,2,2-tetrachloroethane showed the characteristic resonance of benzocyclobutene at 6 3.09 ppm. The composition of the terpolymer was estimated by NMR to contain approximately 0.15 %m 4-(3-butenyl)benzocyclobutene, 74 %m ethylene, and 25.7 %m propylene. The terpolymer is schematically illustrated as follows:

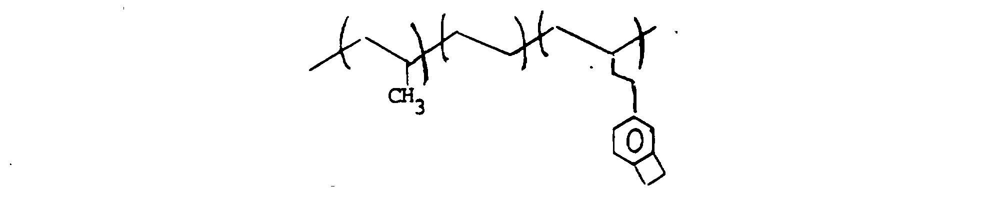

### Example 5

### A - Preparation of 4-vinylbenzocyclobutene

A solution of 4-chloromethylbenzocyclobutene (24.4 g, 160 mmol) and triphenylphosphine (41.9 g, 160 mmol) in 120 ml of chloroform was heated at reflux for 24 h. Addition of diethyl ether followed by filtration gave triphenyl (4-benzocyclobutenyl)methyl phosphonium chloride as a white powder: ¹H NMR (CDCl₃) δ 3.03 (m, 4H), 5.36 (d, 2H) 6.82 (m, 3H), 7.6-7.8 (m, 15H). To a solution of the phosphonium salt in 500 ml of 37% formaldehyde in water was added dropwise 75 ml of 50% aqueous sodium hydroxide. The mixture was stirred at ambient temperature for 2 h and then extracted with diethyl ether. The ether extract was washed with brine and dried over magnesium sulphate. Fractional distillation gave 14.5 g of 90% pure 4-vinylbenzocyclobutene: bp 63-66 °C (8 mbar); ¹H NMR (CDCl₃) δ 3.11 (s, 4H), 5.11 (d, 1H), 5.63 (d, 1H), 6.66 (dd, 1H), 6.95 (d, 1H), 7.10 (s, 1H), 7.18 (d, 1H); ¹³C NMR (CDCl₃) δ 29.29, 29.44, 112.27, 119.87, 122.52, 125.70, 136.72, 137.97, 146.66, 146.01.

### B - Free radical copolymerization of styrene and 4-vinylbenzocyclobutene

A mixture of styrene (5 g, 48 mmol), 4-vinylbenzocyclobutene (0.1 g, 0.77 mmol) prepared as described in section A of this Example and benzoyl peroxide (0.11 g) was heated under inert atmosphere for 2 days at 50 °C and 1 day at 60 °C. The resulting solid plug was dissolved in toluene and reprecipitated from methanol. The precipitate was collected by vacuum filtration and dried at 70 °C in vacuo to give 4.56 g of a white powder. NMR analysis of the product showed the presence of characteristic ¹³C and ¹H resonances of benzocyclobutene at δ 29.24 and 3.1, respectively. The product was estimated to contain 1-2 %m of 4-vinylbenzocyclobutene based on NMR integration. Compression moulding of the copolymer at 150 °C gave a film which was soluble in toluene, whereas a film of the copolymer prepared by moulding at 200 °C for 17 h was insoluble in toluene, methylene chloride or tetrahydrofuran.

### Example 6 -Anionic copolymerization of 4-vinylbenzocyclobutene and styrene

To a solution of 4-vinylbenzocyclobutene (0.45 g, 3.5 mmol), prepared as described in section A of Example 5 styrene (26.7 g, 257 mmol), 200 µl of 1-n-butoxy-2-t-butoxyethane in 233 g of cyclohexane was added 0.84 mmol of s-butyl lithium. After heating at 50 C for 2 h under an inert atmosphere, the polymerization was terminated by the addition of 3 ml of 1 %w lonol ("lonol" is a trade name for 2,6-ditert.-butyl-4-methylphenol) in methanol. The product was isolated by precipitation from methanol and dried in vacuo at 80 °C to give 26 g of a white, brittle solid. The polymer was shown by ¹H NMR to contain 1.2 %m of 4-vinylbenzocyclobutene based on the benzocyclobutene resonance at δ 3.08. Compression moulding at 250 °C for 10 min gave a film which was insoluble in either toluene or tetrahydrofuran. Under identical conditions, homopolystyrene gave soluble films.

### Example 7 - Preparation of styrene-butadiene triblock polymers with 4-vinylbenzocyclobutene in the styrene block

To a solution of styrene (9.73 g, 93.6 mmol), 4-vinylbenzocyclobutene, prepared as described in Example 5 (164 mg, 1.26 mmol), and 25 µl of 1-n-butoxy-2-t-butoxyethane in 233 g of cyclohexane was added 1.3 mmol of s-butyl lithium. After the mixture was heated at 50 °C for 30 min under an inert atmosphere, butadiene (25.6 g, 474 mmol) was added and the heating was continued for an additional 2.5 h. The polymerization was terminated by the addition of 0.5 mmol of methyl benzoate. GPC analysis showed the product to be a mixture of polystyrene (7.9%, MW 7,500), styrene-butadiene diblock (35.4%, MW 28,000), styrene-butadiene-styrene triblock (54.4%, MW 58,000), and styrene-butadiene multiblock (2.3%, MW 106,000). ¹H NMR showed the product to contain 28 %w styrene, 1.2 %m 4-vinylbenzocyclobutene in the styrene block, and 40 %m vinyl in the butadiene block.

### Example 8

Various styrene-butadiene-styrene block copolymers with 4-vinylbenzocyclobutene (VBC) in the styrene blocks were prepared in a manner similar to that used in Example 7.

Reactive styrene-butadiene-styrene block polymers containing VBC were prepared using styrene monomer containing 1.3 %m of VBC. The polymerizations were carried out in glass bottles at 50 °C in cyclohexane using s-BuLi as initiator and the results are summarized in Table 5 hereinafter. Styrene-butadiene-styrene triblock polymers were prepared by sequential anionic polymerization of styrene and butadiene using twice the theoretical amounts of BuLi followed by coupling the living diblock polymers with methyl benzoate. GPC analysis showed the products to be mixtures of diblock and triblock polymer whose experimental molecular weights were in good agreement with those calculated based on zero consumption of BuLi by impurities. The coupling efficiencies based on methyl benzoate were generally in the range of 70-80% (see Table 6 hereinafter).

The presence of benzocyclobutene in the products can be readily confirmed by the magnetic resonance of the ethylene protons in benzocyclobutene at δ 3.1 ppm. Quantitative ¹H NMR showed the styrene-butadiene-styrene triblock polymer to contain 1.2 %m VBC based on styrene. This value agrees well with that of 1.3 %m VBC in styrene monomer.

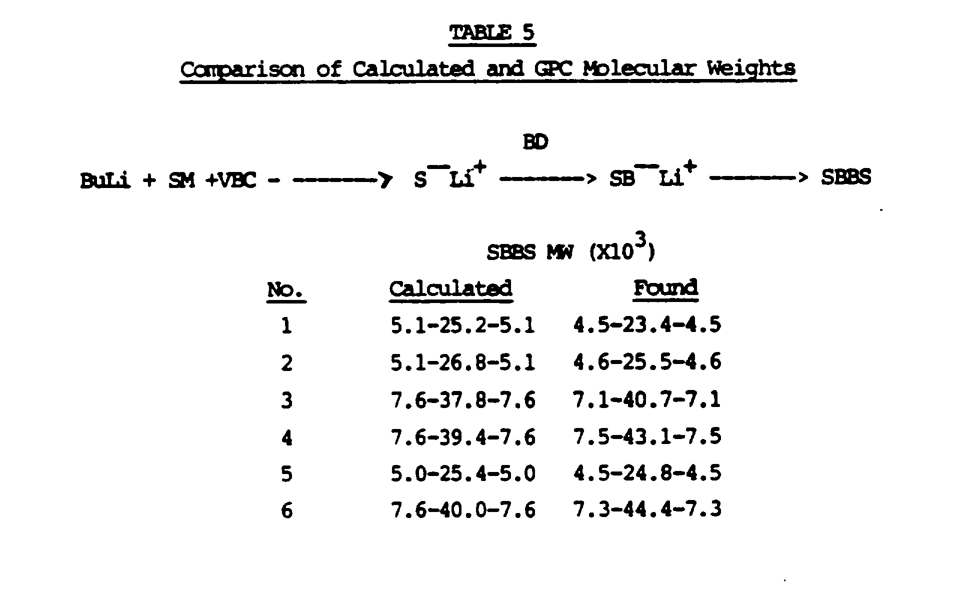

**TABLE 6**

| No. | %SBBS | | Coupling Efficiency (%) |
|---|---|---|---|
| | Calculated | Found | |
| 1 | 78 | 58 | 73.4 |
| 2 | 79 | 50 | 63.3 |
| 3 | 77 | 62 | 80.5 |
| 4 | 77 | 54 | 70.1 |
| 5 | 79 | 61 | 77.2 |
| 6 | 77 | 62 | 80.5 |

### Example 9 - Hydrogenation of styrene-butadiene triblock polymer containing 4-vinylbenzocyclobutene in the styrene block

Hydrogenation of styrene-butadiene block copolymers (similar to those prepared in Example 7) containing 1.3 %mol of VBC (based on styrene) were carried out in a 300 ml autoclave using a hydrogenation catalyst derived from nickel octoate and triethyl aluminium. Conversions were determined by NMR and ozonolysis to be > 98%. The VBC contents in the polymers before and after hydrogenation were estimated from the characteristic proton resonance of benzocyclobutene at δ 3.1 ppm. While it is difficult to determine the VBC content with high degree of accuracy due to the low levels, the results in Table 7 suggest that most of the benzocyclobutenes survived the hydrogenation intact and the proposed method of manufacturing reactive hydrogenated block copolymer via VBC is technically feasible.

To evaluate the effect of benzocyclobutene coupling on the mechanical properties, a hydrogenated polymer (molecular weight, 7500S-42000EB-7500S; 60% triblock; 1.5-1.6 VBC/triblock chain) was compression moulded at 150 °C and 250 °C, respectively. At 150 °C, little or no coupling occurred and the resulting film was completely soluble in toluene. The 250 °C film disintegrated in toluene to give highly swollen gels as a result of the expected coupling of benzocyclobutenes. The mechanical data in Table 8 show that the higher moulding temperature gives higher modulus and lower rate of stress relaxation. Since Shell KRATON G Rubber 1652, a polymer with similar molecular weight (7500S-37500EB-7500S), exhibits the opposite effect of temperature on modulus and stress relaxation, the observed changes in properties may be attributed to benzocyclobutene coupling ("KRATON G" is a trade name for a partially hydrogenated styrene-ethylene/butylene-styrene block copolymer).

The present example suggests the possibility that the resistance to stress relaxation by low molecular weight polymers such as KG-1652 can be improved by the incorporation of small amounts of benzocyclobutene (<two per chain). One possible mechanism is that the increase of molecular weight would lead to better phase segregation and consequently improved properties.

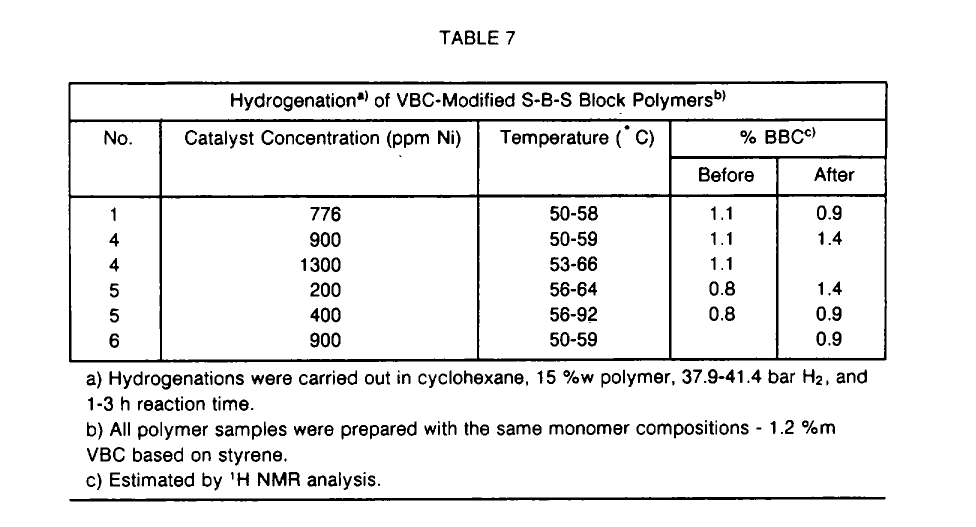

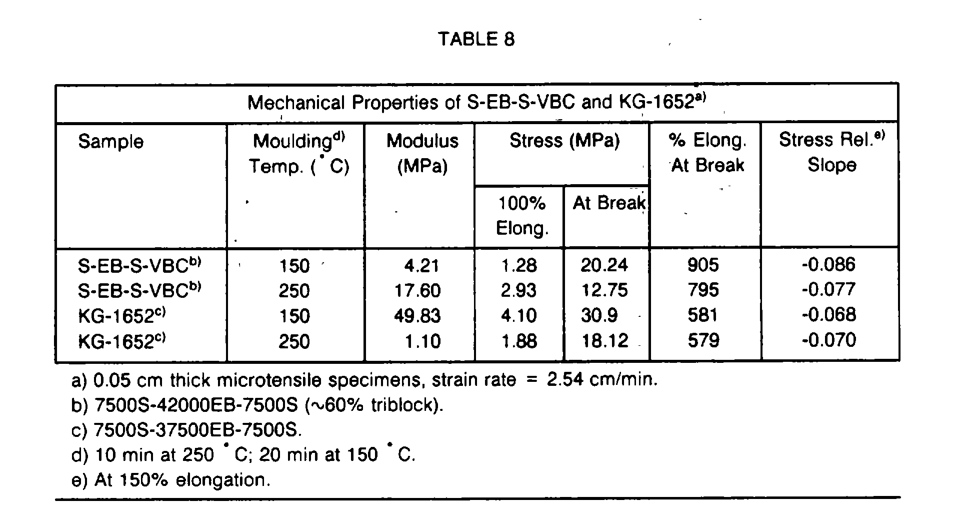

## Claims

1. An alpha monoolefin polymer of a benzocyclobutene of the general formula (I): 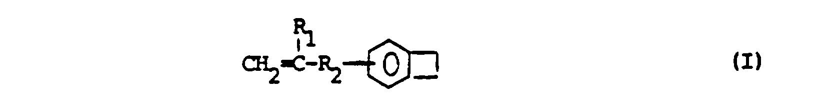 where R₁ represents a hydrogen atom or a methyl group and R₂ a 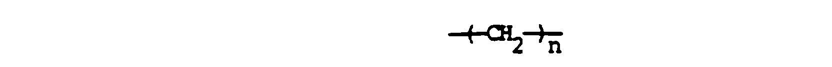 group where n is 0 or an integer from 1 to 6.

2. A polymer as claimed in claim 1 which is a solid homopolymer.

3. A polymer as claimed in claim 2 wherein n in the general formula I is 0, 1 or 2.

4. A polymer as claimed in claim 3 which is a homopolymer of
(a) 4-(3-butenyl)benzocyclobutene,
(b) 3-(3-butenyl) benzocyclobutene.
(c) 4-allylbenzocyclobutene,
(d) 3-allylbenzocyclobutene,
(e) 4-vinylbenzocyclobutene, or
(f) 3- vinylbenzocyclobutene.

5. A process for the preparation of a polymer as claimed in any one of claims 2 to 4 which process comprises homopolymerizing a benzocyclobutene of the general formula (I) 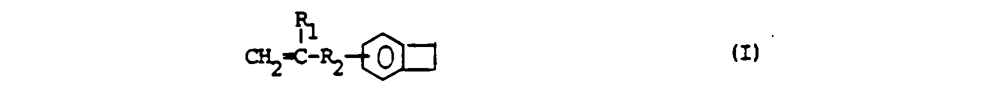 where R₁ represents a hydrogen atom or a methyl group and R₂ a 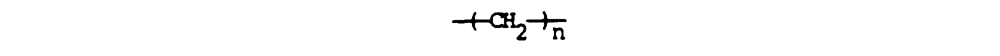 group where n is 0 or an integer from 1 to 6, in the presence of a polyolefin coordination catalyst.

6. A polymer as claimed in claim 1 which is a solid copolymer of a benzocyclobutene of the general formula I and of
(a) a C₂-C₈ alphamonoolefin,
(b) a monoalkenyl arene and which copolymer is a random copolymer, or
(c) a monoalkenyl arene and which copolymer is an AB block copolymer, ABA block copolymer, 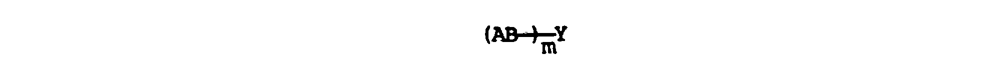 block copolymer, 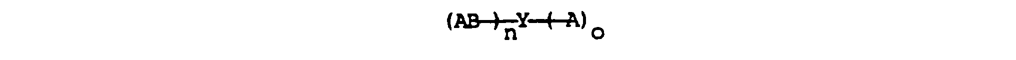 block copolymer or an 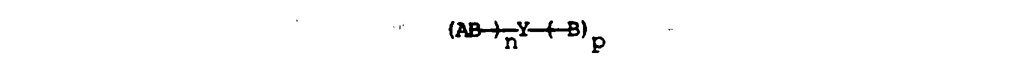 block copolymer or a mixture thereof where each "A" represents a copolymer block of a monoalkenyl arene monomer and a benzocyclobutene of the general formula I in which n is zero, each "B" represents a polymerized conjugated diene hydrocarbon block or a substantially completely hydrogenated conjugated diene polymer block and each of "m", "n", "o" and "p" is an integer in the range of from 1 to 30 and "Y" represents the residue of a multifunctional coupling agent or multifunctional initiator.

7. A copolymer as claimed in claim 6 which is a crystalline copolymer of a benzocyclobutene of the general formula I in claim 1, and a C₂-C₈ alphamonoolefin.

8. A copolymer as claimed in claim 7 wherein said alphamonoolefin is ethylene, propylene, 1-butene or 4-methyl-1-pentene or mixtures thereof.

9. A copolymer as claimed in claim 8 wherein said alphamonoolefin is propylene.

10. A copolymer as claimed in claim 8 wherein said alphamonoolefin is a mixture of ethylene and propylene.

11. A copolymer as claimed in any one of claims 7 to 10 which comprises in the range of from 99.99 to 85 mol per cent C₂-C₈ alphamonoolefin and in the range of from 0.01 to 15 mol per cent benzocyclobutene of the general formula I.

12. A copolymer as claimed in claim 6 which is substantially amorphous copolymer of a benzocyclobutene of the general formula I, ethylene and propylene.

13. A copolymer as claimed in claim 12 which comprises in the range of from 20 to 80 mol per cent ethylene, in the range of from 80 to 20 mol per cent propylene and in the range of from 0.1 to 20 mol per cent benzocyclobutene of the general formula I.

14. A process for the preparation of a copolymer as claimed in any one of claims 7 to 13 which process comprises copolymerizing a C₂-C₈ alphamonoolefin and a benzocyclobutene of the general formula (I) 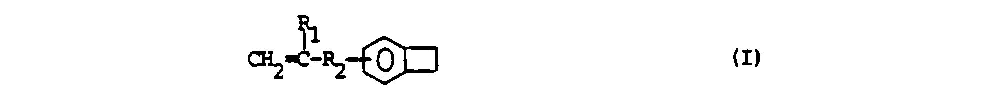 where R₁ represents a hydrogen atom or a methyl group and R₂ a 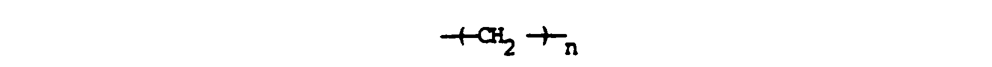 group where n is 0 or an integer from 1 to 6, in the presence of a polyolefin coordination catalyst.

15. A process as claimed in claim 5 or 14 wherein a homopolymer of a benzocyclobutene of the general formula I or a crystalline copolymer of a benzocyclobutene of the general formula I and a C₂-C₈ alphamonoolefin, respectively, is prepared in the presence of a titanium trichloride/trialkylaluminium coordination catalyst, a titanium trichloride/triethylaluminium coordination catalyst or a titanium trichloride/diethyl aluminium chloride coordination catalyst.

16. A process as claimed in claim 14 wherein a substantially amorphous copolymer of a benzocyclobutene of the general formula I, ethylene and propylene is prepared by copolymerizing said benzocyclobutene, ethylene and propylene in the presence of a vanadium(V) trichloride oxide-triethyldialuminium trichloride catalyst.

17. A copolymer as claimed in claim 6 which is a random copolymer of a monoalkenyl arene having a content of a benzocyclobutene of the general formula I in the range of from 0.01 to 20 mol per cent.

18. A copolymer as claimed in claim 6 or 17 which is a random copolymer of (a) a benzocyclobutene of the general formula I and (b) styrene, p-methylstyrene or alpha-methylstyrene.

19. A copolymer as claimed in claim 18 which is a random copolymer of styrene.

20. A copolymer as claimed in any one of claims 6 and 17 to 19 which is a random copolymer of a monoalkenyl arene and a third copolymerizable vinyl monomer.

21. A copolymer as claimed in claim 20 wherein said third copolymerizable vinyl monomer is methyl acrylate, ethyl acrylate, methyl methacrylate, acrylonitrile, butadiene, isoprene or chloroprene.

22. A copolymer as claimed in claim 6 and any one of claims 17 to 21 which is a graft copolymer of a monoalkenyl arene, a benzocyclobutene of the general formula I and a rubbery backbone polymer.

23. A copolymer as claimed in claim 22 wherein said backbone polymer is polybutadiene.

24. A copolymer as claimed in any one of claims 6 to 13 and 17 to 23 wherein n in the general formula I is 0, 1 or 2.

25. A copolymer as claimed in claim 24 wherein the benzocyclobutene of the general formula I is
(a) 4-(3-butenyl)benzocyclobutene,
(b) 3-(3-butenyl)benzocyclobutene,
(c) 4- allylbenzocyclobutene,
(d) 3- allylbenzocyclobutene,
(e) 4- vinylbenzocyclobutene, or
(f) 3- vinylbenzocyclobutene.

26. A copolymer as claimed in claim 25 wherein the benzocyclobutene of the general formula I is 4-(3-butenyl)benzocyclobutene.

27. A process for the preparation of a random copolymer of a benzocyclobutene of the general formula I and a monoalkenylarene as claimed in any one of claims 6 and 17 to 26, which process comprises copolymerizing a monoalkenylarene and a benzocyclobutene of the general formula I in the presence of a catalyst at a temperature in the range of from -80 °C to +150 °C.

28. A process as claimed in claim 27 wherein said catalyst is a free radical catalyst.

29. A process as claimed in claim 27 wherein said catalyst is an anionic catalyst.

30. A block copolymer as claimed in claim 6 section (c) where said monoalkenylarene is styrene and said conjugated diene is butadiene or isoprene.

31. A block copolymer as claimed in claim 6 section (c) or claim 30 wherein said benzocyclobutene is 4-vinylbenzocyclobutene.

32. A block copolymer as claimed in any one of claim 6 section (c) and claims 30 and 31 wherein the number average molecular weight of the A block or blocks is in the range of from 300 to 30,000 and the number average molecular weight of the B block or blocks is in the range of from 15,000 to 100,000.

33. A block copolymer as claimed in any one of claim 6 section (c) and claims 30 to 32 wherein the A block comprises in the range of from 0.01 to 20 mol per cent benzocyclobutene monomer and in the range of from 99.99 to 80 mol per cent monoalkenylarene monomer.

34. The AB block copolymer of any one of claims 6 and 30 to 33.

35. The ABA block copolymer of any one of claims 6 and 30 to 33.

36. The 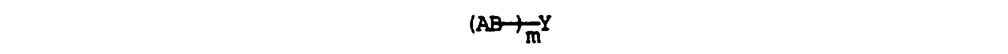 block copolymer of any one of claims 6 and 30 to 33.

37. A solid copolymer having increased molecular weight or network structures prepared by heating a copolymer as claimed in any one of claims 6 sections (a) and (b), claims 7 to 13, 17 to 26 and 31 to 36 to a temperature above 200 °C.

38. A process for the preparation of an AB block copolymer as claimed in claim 34 in which "B" represents a polymerized conjugated diene hydrocarbon block, which process comprises:-
a) solution polymerizing a monoalkenyl arene monomer and a benzocyclobutene monomer of the general formula II 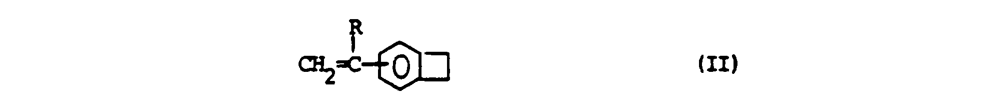 wherein R represents a hydrogen atom or a CH₃ group under polymerization conditions at a temperature between -75 °C and +150 °C with an organomonolithium initiator therein forming a living polymeric arm A-Li;
b) contacting said living polymeric arm A-Li with a conjugated diene monomer therein forming a polymeric arm AB-Li; and
c) recovering the resulting block copolymer AB.

39. A process for the preparation of an ABA block copolymer as claimed in claim 35 in which "B" represents a polymerized conjugated diene hydrocarbon block, which process comprises:-
a) solution polymerizing a monoalkenyl arene monomer and a benzocyclobutene monomer of the general formula II 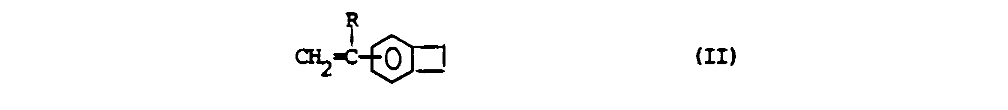 wherein R represents a hydrogen atom or a CH₃ group under polymerization conditions at a temperature between -75 °C and +150 °C with an organomonolithium initiator therein forming a living polymeric arm A-Li;
b) contacting said living polymeric arm A-Li with a conjugated diene monomer therein forming a polymeric arm AB-Li; and
c) contacting said living polymeric arm AB-Li with additional monoalkenyl arene monomer and benzocyclobutene monomer, therein forming a polymeric arm ABALi; and
d) recovering the resulting block copolymer ABA.

40. A process for the preparation of a block copolymer 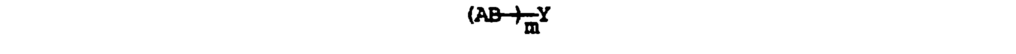 as claimed in claim 36 in which "B" represents a polymerized conjugated diene hydrocarbon block, which process comprises:-
a) solution polymerizing a monoalkenyl arene monomer and a benzocyclobutene monomer of the general formula II 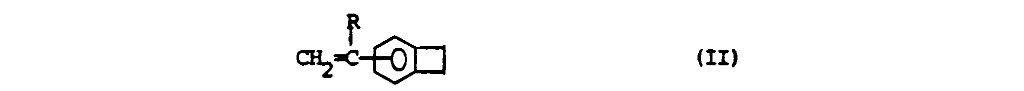 wherein R represents a hydrogen atom or a CH₃ group under polymerization conditions at a temperature between -75 °C and +150 °C with an organomonolithium initiator therein forming a living polymeric arm A-Li;
b) contacting said living polymeric arm A-Li with a conjugated diene monomer therein forming a polymeric arm AB-Li; and
c) contacting said living polymeric arm AB-Li with a coupling agent therein forming the block copolymer 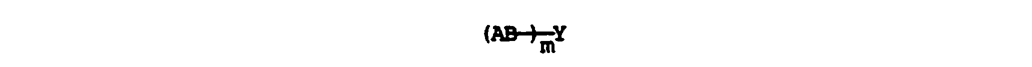 where Y is the residue of the coupling agent and "m" is between 1 and 30.

41. A process for the preparation of an AB block copolymer as claimed in claim 34 in which "B" represents a substantially completely hydrogenated conjugated diene polymer block, which process comprises:- a) solution polymerizing a monoalkenyl arene monomer and a benzocyclobutene monomer of the formula II 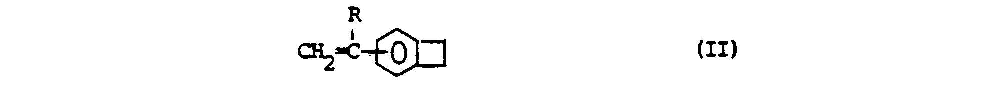 wherein R represents a hydrogen atom or a CH₃ group under polymerization conditions at a temperature between -75 °C and +150 °C with an organomonolithium initiator therein forming a living polymeric arm A-Li;
b) contacting said living polymeric arm A-Li with a conjugated diene monomer therein forming a polymeric arm AB-Li;
c) selectively hydrogenating the polymer AB-Li therein forming the polymer AB-Li; and
d) recovering the resulting block copolymer AB.

42. A process for the preparation of an ABA block copolymer as claimed in claim 35 in which "B" represents a substantially completely hydrogenated conjugated diene polymer block, which process comprises:-
a) solution polymerizing a monoalkenyl arene monomer and a benzocyclobutene monomer of the formula II 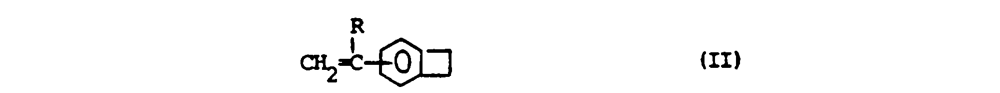 wherein R represents a hydrogen atom or a CH₃ group under polymerization conditions at a temperature between -75 °C and +150 °C with an organomonolithium initiator therein forming a living polymeric arm A-Li;
b) contacting said living polymeric arm A-Li with a conjugated diene monomer therein forming a polymeric arm AB'Li;
c) contacting said living polymeric arm AB'Li with additional monoalkenyl arene monomer and benzocyclobutene monomer, therein forming a polymer AB'ALi;
d) selectively hydrogenating the AB'A-Li polymer therein forming the polymer ABA-Li; and
e) recovering the resulting block copolymer ABA.

43. A process for the preparation of a block copolymer 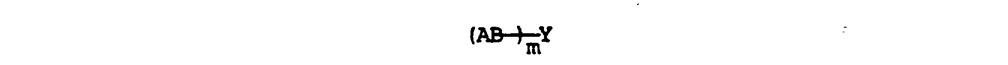 as claimed in claim 36 in which "B" represents a substantially completely hydrogenated conjugated diene polymer block, which process comprises:-
a) solution polymerizing a monoalkenyl arene monomer and a benzocyclobutene monomer of the formula II 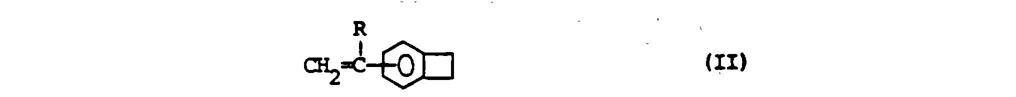 wherein R represents a hydrogen atom or a methyl group under polymerization conditions at a temperature between -75 °C and +150 °C with an organomonolithium initiator therein forming a living polymeric arm A-Li;
b) contacting said living polymeric arm A-Li with a conjugated diene monomer therein forming a polymeric arm AB'-Li;
c) contacting said living polymeric arm AB'-Li with a -coupling agent therein forming the block copolymer 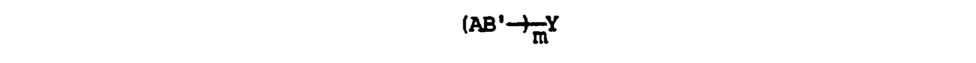 wherein Y is the residue of the coupling agent and "m" is between 1 and 30; and
d) selectively hydrogenating said block copolymer 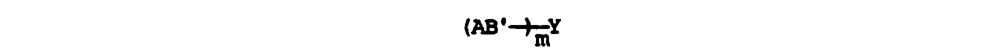 therein forming the polymer

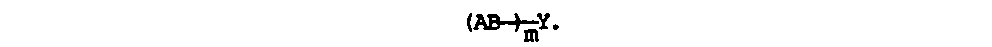

44. A process as claimed in any one of the claims 41 to 43 wherein said selective hydrogenation is carried out with a nickel octoate/aluminium triethyl catalyst at a temperature below 150 °C.

45. 4-(3- Butenyl)benzocyclobutene.

46. A process for the preparation of the compound claimed in claim 45 which process comprises reacting a 4-halomethylbenzocyclobutene with metallic magnesium and reacting the 4-halomagnesiummethylbenzocyclobutene thus formed with an allyl halide.

47. A process as claimed in claim 46 in which the 4-halomethylbenzocyclobutene is 4-chloromethylbenzocyclobutene and the allyl halide is allyl bromide.

## Patentansprüche

1. α-Monoolefinpolymer eines Benzocyclobutens der allgemeinen Formel (I): 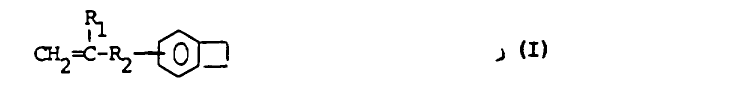 worin R₁ ein Wasserstoffatom oder eine Methylgruppe bedeutet und R₂ eine 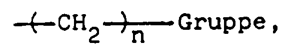 worin n 0 oder eine ganze Zahl von 1 bis 6 bedeutet, darstellt.

2. Polymer nach Anspruch 1 in Form eines festen Homopolymers.

3. Polymer nach Anspruch 2, dadurch gekennzeichnet, daß n in der allgemeinen Formel I 0, 1 oder 2 ist.

4. Polymer nach Anspruch 3, dadurch gekennzeichnet, daß es ein Homopolymer von
(a) 4-(3-Butenyl)benzocyclobuten,
(b) 3-(3-Butenyl)benzocyclobuten,
(c) 4-Allylbenzocyclobuten,
(d) 3-Allylbenzocyclobuten,
(e) 4-Vinylbenzocyclobuten oder
(f) 3-Vinylbenzocyclobuten ist.

5. Verfahren zur Herstellung eines Polymers nach einem der Ansprüche 2 - 4, dadurch gekennzeichnet, daß ein Benzocyclobuten der allgemeinen Formel (I) 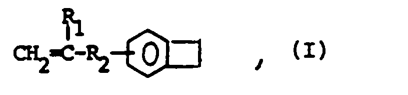 worin R₁ ein Wasserstoffatom oder eine Methylgruppe bedeutet und R₂ eine 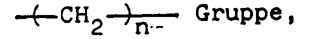 worin n 0 oder eine ganze Zahl von 1 bis 6 bedeutet, darstellt, in Gegenwart eines Polyolefinkoordinationskatalysators homo-polymerisiert wird.

6. Polymer nach Anspruch 1, dadurch gekennzeichnet, daß es ein festes Copolymer aus einem Benzocyclobuten der allgemeinen Formel I und aus
(a) einem C₂-C₈-α-Monoolefin,
(b) einem Monoalkenylaren, welches Copolymer ein statistisches Copolymer ist, oder
(c) einem Monoalkenylaren, welches Copolymer ein AB-Blockcopolymer, ABA-Blockcopolymer, 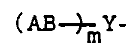 Blockcopolymer, 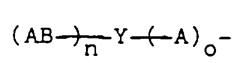 Blockcopolymer oder ein 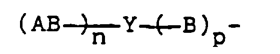 Blockcopolymer oder ein Gemisch hievon ist, worin jedes "A" einen Copolymerblock aus einem Monoalkenylarenmonomer und einem Benzocyclobuten der allgemeinen Formel I, worin n 0 bedeutet, darstellt, jedes "B" einen polymerisierten konjugierten Dienkohlenwasserstoff-Block oder einen im wesentlichen vollständig hydrierten konjugierten Dienpolymer-Block bedeutet und "m", "n", "o" und "p" jeweils eine ganze Zahl im Bereichvon 1 - 30 bedeuten und "Y" den Rest eines multifunktionellen Kupplungsmittels oder multifunktionellen Initiators bedeutet,
ist.

7. Copolymer nach Anspruch 6 dadurch gekennzeichnet, daß es ein kristallines Copolymer eines Benzocyclobutens der allgemeinen Formel I in Anspruch 1 mit einem C₂-C₈-α-Monoolefin ist.

8. Copolymer nach Anspruch 7 dadurch gekennzeichnet, daß das α-Monoolefin Ethylen, Propylen, 1-Buten oder 4-Methyl-1-Penten oder ein Gemisch hievon ist.

9. Copolymer nach Anspruch 8, dadurch gekennzeichnet, daß das α-Monoolefin Propylen ist.

10. Copolymer nach Anspruch 8,dadurch gekennzeichnet, daß das α-Monoolefin ein Gemisch aus Ethylen und Propylen ist.

11. Copolymer nach einem der Ansprüche 7 - 10, dadurch gekennzeichnet, daß es von 99,99 bis 85 Mol-% C₂-C₈-α-Monoolefin und von 0,01 bis 15 Mol-% Benzocyclobuten der allgemeinen Formel I enthält.

12. Copolymer nach Anspruch 6, dadurch gekennzeichnet, daß es ein im wesentlichen amorphes Copolymer aus einem Benzocyclobuten der allgemeinen Formel I, Ethylen und Propylen ist.

13. Copolymer nach Anspruch 12, dadurch gekennzeichnet, daß es 20 bis 80 Mol-% Ethylen, 80 - 20 Mol-% Propylen und 0,1 bis 20 Mol-% Benzocyclobuten der allgemeinen Formel I enthält.

14. Verfahren zur Herstellung eines Copolymers nach einem der Ansprüche 7 - 13, dadurch gekennzeichnet, daß ein C₂-C₈ α-Monoolefin und ein Benzocyclobuten der allgemeinen Formel I 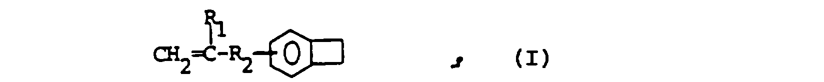 worin R₁ ein Wasserstoffatom oder eine Methylgruppe bedeutet und R₂ eine 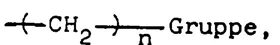 worin n 0 oder eine ganze Zahl von 1 bis 6 darstellt, bedeutet, in Gegenwart eines Polyolefinkoordinationskatalysators copolymerisiert wird.

15. Verfahren nach Anspruch 5 oder 14, dadurch gekennzeichnet, daß ein Homopolymer aus einem Benzocyclobuten der allgemeinen Formel I bzw. ein kristallines Copolymer aus einem Benzocyclobuten der allgemeinen Formel I und einem C₂-C₈-α-Monoolefin in Gegenwart eines Titantrichlorid/Trialkyl-aluminium-Koordinationskatalysators, eines Titantrichlorid/Triethylaluminium-Koordinationskatalysators oder eines Titantrichlorid/Diethylaluminiumchlorid-Koordinationskatalysators hergestellt wird.

16. Verfahren nach Anspruch 14, dadurch gekennzeichnet, daß ein im wesentlichen amorphes Copolymer aus einem Benzocyclobuten der allgemeinen Formel I, Ethylen und Propylen durch Copolymerisieren von Benzocyclobuten, Ethylen und Propylen in Gegenwart eines Vanadium (V)-trichloridoxyd-Triethyldialuminiumtrichlorid-Katalysators hergestellt wird.

17. Copolymer nach Anspruch 16, dadurch gekennzeichnet, daß es ein statistisches Copolymer eines Monoalkenylarens mit einem Gehalt an einem Benzocyclobuten der allgemeinen Formel I von 0,01 bis 20 Mol-% ist.

18. Copolymer nach Anspruch 6 oder 17, dadurch gekennzeichnet, daß es ein statistisches Copolymer aus (a) einem Benzocyclobuten der allgemeinen Formel I und (b) Styrol, p-Methylstyrol oder α-Methylstyrol ist.

19. Copolymer nach Anspruch 18, dadurch gekennzeichnet, daß es ein statistisches Styrol-Copolymer ist.

20. Copolymer nach einem der Ansprüche 6 und 17 bis 19, dadurch gekennzeichnet, daß es ein statistisches Copolymer aus einem Monoalkenylaren und einem dritten copolymerisierbaren Vinylmonomer ist.

21. Copolymer nach Anspruch 20, dadurch gekennzeichnet, daß das dritte copolymerisierbare Vinylmonomer Methylacrylat, Ethylacrylat, Methylmethacrylat, Acrylnitril, Butadien, Isopren oder Chloropren ist.

22. Copolymer nach Anspruch 6 und einem der Ansprüche 17-21, dadurch gekennzeichnet, daß es ein Pfropfcopolymer aus einem Monoalkenylaren, einem Benzocyclobuten der allgemeinen Formel I und einem kautschukartigen Rückgratpolymer ist.

23. Copolymer nach Anspruch 22, dadurch gekennzeichnet, daß das Rückgratpolymer Polybutadien ist.

24. Copolymer nach einem der Ansprüche 6 bis 13 und 17 bis 23, dadurch gekennzeichnet daß n in der allgemeinen Formel I 0, 1 oder 2 bedeutet.

25. Copolymer nach Anspruch 24, dadurch gekennzeichnet, daß das Benzocyclobuten der allgemeinen Formel I
(a)4-(3-Butenyl)benzocyclobuten,
(b)3-(3-Butenyl)benzocyclobuten,
(c)4-Vinylbenzocyclobuten,
(d)3-Vinylbenzocyclobuten,
(e)4-Allylbenzocyclobuten,
(f)3-Allylbenzocyclobuten,
(g)4-Isopropenylbenzocyclobuten oder
(h)3-Isopropenylbenzocyclobuten ist.

26. Copolymer nach Anspruch 25, dadurch gekennzeichnet, daß das Benzocyclobuten der allgemeinen Formel I 4-(3-Butenyl)benzocyclobuten ist.

27. Verfahren zur Herstellung eines statistischen Copolymers aus einem Benzocyclobuten der allgemeinen Formel I und einem Monoalkenylaren nach einem der AnsprUche 6 und 17 bis 26, dadurch gekennzeichnet, daß ein Monoalkenylaren und ein Benzocyclobuten der allgemeinen Formel I in Gegenwart eines Katalysators bei einer Temperatur im Bereich von -80°C bis +150°C copolymerisiert werden.

28. Verfahren nach Anspruch 27, dadudrch gekennzeichnet, daß der Katalysator ein freiradikalischer Katalysator ist.

29. Verfahren nach Anspruch 27, dadurch gekennzeichnet, daß der Katalysator ein anionischer Katalysator ist.

30. Blockcopolymer nach Anspruch 6 (Abschnitt c), dadurch gekennzeichnet, daß das Monoalkenylaren Styrol ist und das konjugierte Dien Butadien oder Isopren ist.

31. Blockcopolymer nach Anspruch 6, (Abschnitt c) oder Anspruch 30, dadurch gekennzeichnet, daß das Benzocyclobuten 4-Vinylbenzocyclobuten ist.

32. Blockcopolymer nach einem der Ansprüche 6, (Abschnitt c) und 30 und 31, dadurch gekennzeichnet, daß das zahlenmäßige mittlere Molekulargewicht des A-Blocks oder der A-Blöcke im Bereich von 300 bis 30.000 liegt und das zahlenmäßige mittlere Molekulargewicht des B-Blocks oder der B-Blöcke im Bereich von 15.000 bis 100.000 liegt.

33. Blockcopolymer nach einem der Ansprüche 6, (Abschnitt c) und 30 bis 32, dadurch gekennzeichnet, daß deP A-Block 0,01 bix 20 Mol-% Benzocyclobutenmonomer und 99,99 bis 80 Mol-% Monoalkenylarenmonomer enthält.

34. AB-Blockcopolymer nach einem der Ansprüche 6 und 30 bis 33.

35. ABA-Blockcopolymer nach einem der Ansprüche 6 und 30 bis 33.

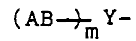

36. Blockcopolymer nach einem der Ansprüche 6 und 30 bis 33.

37. Festes Copolymer mit erhöhtem Molekulargewicht oder gesteigerten Netzwerksstrukturen, hergestellt durch Erhitzen eines Copolymers nach einem der Anspruche 6, Abschnitte (a) und (b), 7 bis 13, 17 bis 26 und 31 bis 36 auf eine Uber 200°C liegende Temperatur.

38. Verfahren zur Herstellung eines AB-Blockcopolymers nach Anspruch 34, worin "B" einen polymerisierten, konjugierten Dien-Kohlenwasserstoffblock darstellt, dadurch gekennzeichnet, daß:
a) ein Monoalkenylarenmonomer und ein Benzocyclobutenmonomer der allgemeinen Formel II 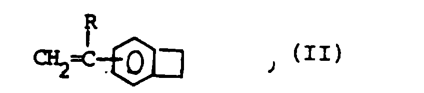 worin R ein Wasserstoffatom oder eine CH₃-Gruppe bedeutet, unter Polymerisationsbedingungen bei einer Temperatur zwischen -75°C und 150°C mit einem Organomonolithiuminitiator in Lösung polymerisiert wird und darin ein lebender Polymerarm A-Li ausgebildet wird;
b) dieser lebende Polymerarm A-Li mit einem konjugierten Dienmonomer in Berührung gebracht und ein Polymerarm AB-Li ausgebildet wird; und
c) das gebildete Blockcopolymer AB gewonnen wird.

39. Verfahren zur Herstellung eines ABA-Blockcopolymers nach Anspruch 35, worin "B" einen polymerisierten konjugierten Dien-Kohlenwasserstoffblock bedeutet, dadurch gekennzeichnet, daß:
a) ein Monoalkenylarenmonomer und ein Benzocyclobutenmonomer der allgemeinen Formel II 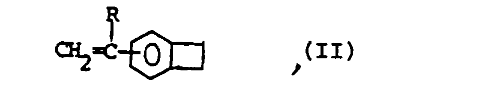 worin R ein Wasserstoffatom oder eine CH₃-Gruppe bedeutet, unter Polymerisationsbedingungen bei einer Temperatur zwischen -75°C und +150°C mit einem Organomonolithiuminitiator in Lösung polymerisiert und darin ein lebender Polymerarm A-Li ausgebildet wird;
b) dieser lebende Polymerarm A-Li mit einem konjugierten Dienmonomer in Berührung gebracht und ein Polymerarm AB-Li ausgebildet wird;
c) dieser lebende Polymerarm AB-Li mit weiterem Monoalkenylarenmonomer und Benzocyclobutenmonomer in Berührung gebracht und ein Polymerarm ABALi ausgebildet wird;und
d) das gebildete Blockcopolymer ABA gewonnen wird.

40. Verfahren zur Herstellung eines 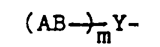 Blockcopolymers nach Anspruch 36, worin "B" einen polymerisierten,konjugierten Dienkohlenwasserstoffblock bedeutet, dadurch gekennzeichnet, daß:
a) ein Monoalkenylarenmonomer und ein Benzocyclobutenmonomer der allgemeinen Formel II 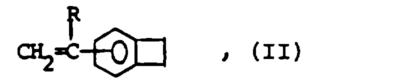 worin R ein Wasserstoffatom oder eine CH₃-Gruppe darstellt, unter Polymerisationsbedingungen bei einer Temperatur zwischen -75°C und +150°C mit einem Organomonolithiuminitiator in Lösung polymerisiert und darin ein lebender Polymerarm A-Li ausgebindet wird;
b) dieser lebende Polymerarm A-Li mit einem konjugierten Dienmonomer in Berührung gebracht und ein Polymerarm AB-Li ausgebildet wird; und
c) dieser lebende Polymerarm AB-Li mit einem Kupplungsmittel in Berührung gebracht und das Blockcopolymer 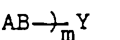 ausgebildet wird, worin Y der Rest des Kupplungsmittels ist und "m" einen Wert zwischen 1 und 30 aufweist.

41. Verfahren zur Herstellung eines AB-Blockcopolymers nach Anspruch 34, worin "B" einen im wesentlichen vollständig hydrierten konjugierten Dienpolymerblock darstellt, dadurch gekennzeichnet, daß:
a) ein Monoalkenyl ar enmonomer und ein Benzocyclobutenmonomer der Formel II 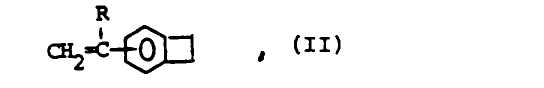 worin R ein Wasserstoffatom oder eine CH₃-Gruppe darstellt, unter Polymerisationsbedingungen bei einer Temperatur zwischen -75°C und + 150°C mit einem Organomonolithiuminitiator in Lösung polymerisiert und darin ein lebender Polymerarm A-Li ausgebildet wird;
b) dieser lebende Polymerarm A-Li mit einem konjugierten Dienmonomer in Berührung gebracht und ein Polymerarm AB'-Li ausgebildet wird;
c) das Polymer AB'-Li selektiv hydriert und das Polymer AB-Li ausgebildet wird; und
d) das erhaltene Blockcopolymer AB gewonnen wird.

42. Verfahren zur Herstellung eines ABA-Blockcopolymers nach Anspruch 35, worin "B" einen im wesentlichen vollständig hydrierten konjugierten Dienpolymerblock darstellt,dadurch gekennzeichnet, daß:
a) ein Monoalkenylarenmonomer und ein Benzocyclobutenmonomer der Formel II 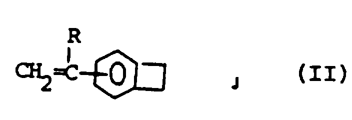 worin R ein Wasserstoffatom oder eine CH₃-Gruppe bedeutet,unter Polymerisationsbedingungen bei einer Temperatur zwischen -75°C und +150°C mit einem Organomonolithiuminitiator in Lösung polymerisiert und darin ein lebender Polymerarm A-Li ausgebildet wird;
b)dieser lebende Polymerarm A-Li mit einem konjugierten Dien-Monomer in Berührung gebracht und ein Polymerarm AB'-Li ausgebildet wird;
c) dieser lebende Polymerarm AB'-Li mit weiterem Monoalkenylarenmonomer und Benzocyclobutenmonomer in Berührung gebracht und ein Polymer AB'A-Li ausgebildet wird;
d) das AB'A-Li-Polymer selektiv hydriert und das Polymer ABA-Li ausgebildet wird; und
e) das gebildete Blockcopolymer ABA gewonnen wird.

43. Verfahren zur Herstellung eines 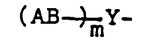 Blockcopolymers nach Anspruch 36, worin "B" einen im wesentlichen vollständig hydrierten konjugierten Dien-Polymerblock bedeutet, dadurch gekennzeichnet, daß:
a) ein Monoalkenylarenmonomer und ein Benzocyclobutenmonomer der Formel II 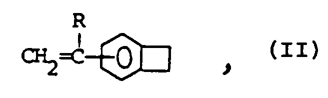 worin R ein Wasserstoffatom oder eine Methylgruppe bedeutet, unter Polymerisationsbedingungen bei einer Temperatur zwischen -75°C und +150°C mit einem Organomonolithiuminitiator in Lösung polymerisiert und darin ein lebender Polymerarm A-Li ausgebildet wird;
b) dieser lebende Polymerarm A-Li mit einem konjugierten Dienmonomer in Berührung gebracht und ein Polymerarm AB'-Li ausgebildet wird;
c) dieser lebende Polymerarm AB'-Li mit einem Kupplungsmittel unter Ausbildung eines Blockcopolymers 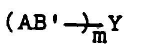 in Berührung gebracht wird, worin Y der Rest des Kupplungsmittels ist und "m" einen Wert zwischen 1 und 30 aufweist; und
d) dieses Blockcopolymer 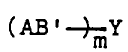 zu dem Polymer 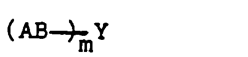 selektiv hydriert wird.

44. Verfahren nach einem der Ansprüche 41 bis 43, dadurch ge kennzeichnet, daß die selektive Hydrierung mit einem Ni-ckeloctoat/Aluminiumtriethyl-Katalysator bei einer Temperatur unter 150°C ausgeführt wird.

45. Die neue chemische Verbindung 4-(3-Butenyl)benzocyclobuten.

46. Verfahren zur Herstellung der in Anspruch 45 beanspruchten Verbindung, dadurch gekennzeichnet, daß ein 4-Halogenmethylbenzocyclobuten mit metallischem Magnesium umgesetzt und das solcherart gebildete 4-Halogenmagnesiummethylbenzocyclobuten mit einem Allylhalogenid reagiert wird.

47. Verfahren nach Anspruch 46, dadurch gekennzeichnet, daß als 4-Halogenmethylbenzocyclobuten 4-Chlormethbenzocyclobuten und als Allylhalogenid Allylbromid eingesetzt werden.

## Revendications

1. Un polymère alphamonooléfiniques d'un benzocyclobutène de la formule générale (I) : 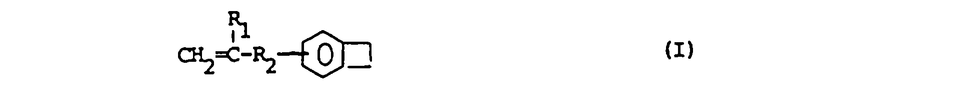 dans laquelle R₁ représente un atome d'hydrogène ou un groupe méthyle et R₂ un groupe -(-CH₂-)-ₙ dans lequel n est 0 ou un nombre entier de 1 à 6.

2. Un polymère tel que revendiqué dans la revendication 1, qui est un homopolymère solide.

3. Un polymère tel que revendiqué dans la revendication 2, dans lequel n dans la formule générale I est 0, 1 ou 2.

4. Un polymère tel que revendiqué dans la revendication 3, qui est un homopolymère de :
(a) 4-(3-butényl)benzocyclobutène,
(b) 3-(3-butényl)benzocyclobutène,
(c) 4-allylbenzocyclobutène,
(d) 3-allylbenzocyclobutène,
(e) 4-vinylbenzocyclobutène, ou de
(f) 3-vinylbenzocyclobutène.

5. Un procédé pour la préparation d'un polymère tel que revendiqué dans l'une quelconque des revendications 2 à 4, dans lequel on homopolymérise un benzocyclobutène de formule générale (I) 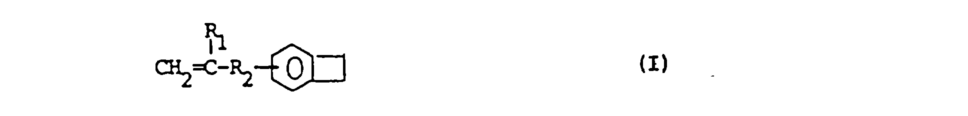 dans laquelle R₁ représente un atome d'hydrogène ou un groupe méthyle et R₂ un groupe -(-CH₂-)-ₙ dans lequel n est 0 ou un nombre entier de 1 à 6, en présence d'un catalyseur de coordination de polyoléfines.

6. Un polymère tel que revendiqué dans la revendication 1, qui est un copolymère solide d'un benzocyclobutène de la formule générale I et de
(a) une alpha-monooléfine en C₂ à C₈,
(b) un monoalcényl arène, ce copolymère étant un copolymère aléatoire, ou
(c) un monoalcényl arène, ce copolymère étant un copolymère séquencé AB, un copolymère séquencé ABA, un copolymère séquencé (AB-)-ₘY, un copolymère séquencé (AB-)-ₙY-(-A)ₒ ou bien un copolymère séquencé (AB-)-ₙY-(-B)ₚ ou un mélange de ceux-ci dans lequel chaque "A" représente un copolymère séquencé d'un monomère de monoalcényl arène et un benzocyclobutène de la formule générale I dans laquelle n est 0, chaque "B" représente une séquence polymérisée hydrocarbonée à diène conjugué ou bien une séquence polymère à diène conjugué pratiquement complètement hydrogéné et chacun des "m", "n", "o" et "p" est un nombre entier dans la gamme de 1 à 30 et "Y" représente le résidu d'un agent de couplage multifonctionnel ou d'un initiateur multifonctionnel.

7. Un copolymère tel que revendiqué dans la revendication 4, qui est un copolymère cristallin d'un benzocyclobutène de la formule générale I dans la revendication 1 et une alpha-monooléfine en C₂ à C₈.

8. Un copolymère tel que revendiqué dans la revendication 7, dans lequel ladite alpha-monoléfine est l'éthylène, le propylène, le 1-butène ou le 4-méthyl-1-pentène ou un mélange de ceux-ci.

9. Un copolymère tel que revendiqué dans la revendication 8, dans lequel ladite alpha-monooléfine est du propylène.

10. Un copolymère tel que revendiqué dans la revendication 8, dans lequel ladite alpha-monooléfine est un mélange d'éthylène et de propylène.

11. Un copolymère tel que revendiqué dans l'une quelconque des revendications 7 à 10, qui comporte de l'ordre de 99,99 à 85 moles % d'une alpha-monooléfine en C₂ à C₈ et de l'ordre de 0,01 à 15 moles % d'un benzocyclobutène de la formule générale I.

12. Un copolymère tel que revendiqué dans la revendication 6, qui est un copolymère pratiquement amorphe d'un benzocyclobutène de la formule générale I, de l'éthylène et du propylène.

13. Un copolymère tel que revendiqué dans la revendication 12, qui comporte de l'odre de 20 à 80 moles % d'éthylène, de l'ordre de 80 à 20 moles % de propylène et de l'ordre de 0,1 à 20 moles % d'un benzocyclobutène de la formule générale I.

14. Un procédé pour la préparation d'un copolymère tel que revendiqué dans l'une quelconque des revendications 7 à 13, dans lequel on copolymérise une alpha-monooléfine en C₂ à C₈ et un benzocyclobutène de formule générale (I) 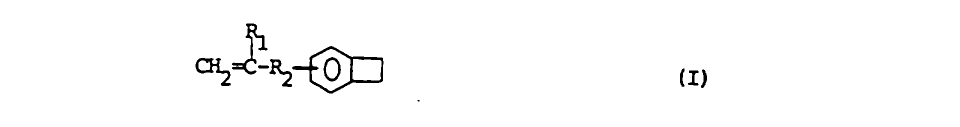 dans laquelle R₁ représente un atome d'hydrogène ou un groupe méthyle et R₂ un groupe -(-CH₂-)-ₙ dans lequel n est 0 ou un nombre entier de 1 à 6, en présence d'un catalyseur de coordination ou de polyoléfine.

15. Un procédé tel que revendiqué dans la revendication 5 ou la revendication 14, dans lequel un homopolymère d'un benzocyclobutène de la formule générale I ou d'un copolymère cristallin d'un benzocyclobutène de la formule générale I et d'une alpha-monooléfine en C₂ à C₈, respectivement, est préparé en présence d'un catalyseur de coordination trichlorure de titane/trialkylaluminium, d'un catalyseur de coordination trichlorure de titane/triéthyl-aluminium ou d'un catalyseur de coordination trichlorure de titane/chlorure de diéthylaluminium.

16. Un procédé tel que revendiqué dans la revendication 14, dans lequel un copolymère pratiquement amorphe d'un benzocyclobutène de la formule générale I, d'éthylène et de propylène est préparé en copolymérisant lesdits benzocyclobutène, éthylène et propylène en présence d'un catalyseur oxyde de trichlorure de vanadium (V)-trichlorure de triéthyldialuminium.

17. Un copolymère tel que revendiqué dans la revendication 6, qui est un copolymère aléatoire d'un monoalcényl arène présentant une teneur en benzocyclobutène de la formule générale I dans la gamme de 0,01 à 20 moles %.

18. Un copolymère tel que revendiqué dans la revendication 6 ou la revendication 7, qui est un copolymère aléatoire de (a) un benzocyclobutène de la formule générale I et (b) styrène, p-méthylstyrène ou alpha-méthylstyrène.

19. Un copolymère tel que revendiqué dans la revendication 18, qui est un copolymère aléatoire du styrène.

20. Un copolymère tel que revendiqué dans l'une quelconque des revendications 6 et 17 à 19, qui est un copolymère aléatoire d'un monoalcényl arène et d'un troisième monomère vinylique copolymérisable.

21. Un copolymère tel que revendiqué dans la revendication 20, dans lequel ledit troisième monomère vinylique copolymérisable est un acrylate de méthyle, un acrylate d'éthyle, un méthacrylate de méthyle, de l'acrylonitrile, du butadiène, de l'isoprène ou du chloroprène.

22. Un copolymère tel que revendiqué dans la revendication 6 et dans l'une quelconque des revendications 17 à 20, qui est un copolymère greffé d'un monoalcényl arène, d'un benzocyclobutène de formule générale I et d'un polymère tronc caoutchouteux.

23. Un copolymère tel que revendiqué dans la revendication 22, dans lequel ledit polymère tronc est du polybutadiène.

24. Un copolymère tel que revendiqué dans l'une quelconque des revendications 6 à 13 et 17 à 23, dans lequel n dans la formule générale I est 0,1 ou 2.

25. Un copolymère tel que revendiqué dans la revendication 24, dans lequel le benzocyclobutène de la formule générale I est :
(a) le 4-(3-butényl)benzocyclobutène,
(b) le 3-(3-butényl)benzocyclobutène,
(c) le 4-allylbenzocyclobutène,
(d) le 3-allylbenzocyclobutène,
(e) le 4-vinylbenzocyclobutène, ou du
(f) le 3-vinylbenzocyclobutène.

26. Un copolymère tel que revendiqué dans la revendication 25, dans lequel le benzocyclobutène de la formule générale I est du 4-(3-butényl)benzocyclobutène.

27. Un procédé pour la préparation d'un copolymère aléatoire d'un benzocyclobutène de la formule générale I et d'un monoalcényl arène tel que revendiqué dans l'une quelconque des revendications 6 et 17 à 26, procédé dans lequel on polymérise un monoalcényl arène et un benzocyclobutène de la formule générale I en présence d'un catalyseur à une température dans la gamme de -80°C à +150°C.

28. Un procédé tel que revendiqué dans la revendication 27, dans lequel ledit catalyseur est un catalyseur à radicaux libres.

29. Un procédé tel que revendiqué dans la revendication 27, dans lequel ledit catalyseur est un catalyseur anionique.

30. Un copolymère séquencé tel que revendiqué dans la revendication 6, point (c), dans lequel ledit monoalcényl arène est du styrène et ledit diène conjugué est du butadiène ou de l'isoprène.

31. Un copolymère séquencé tel que revendiqué dans la revendication 6, point (c) ou dans la revendication 30, dans lequel ledit benzocyclobutène est du 4-vinylbenzocyclobutène.

32. Un copolymère séquencé tel que revendiqué dans l'une quelconque des revendications 6 point (c) et des revendications 30 et 31, dans lequel le poids moléculaire moyen en nombre de la séquence ou des séquences A se situe dans la gamme de 300 à 30 000 et le poids moléculaire moyen en nombre de la séquence ou des séquences B se situe dans la gamme de 15 000 à 100 000.

33. Un copolymère séquencé tel que revendiqué dans l'une quelconque des revendications 6, point (c) et 30 à 32, dans lequel la séquence A comporte de l'ordre de 0,01 à 20 moles % de monomère de benzocyclobutène et de l'ordre de 99,99 à 80 moles % de monomère de monoalcényl arène.

34. Le copolymère séquencé AB de l'une quelconque des revendications 6 et 30 à 33.

35. Le copolymère séquencé ABA de l'une quelconque des revendications 6 et 30 à 33.

36. Le copolymère séquence (AB-)-ₘ-Y- de l'une quelconque des revendications 6 et 30 à 33.

37. Un copolymère solide présentant un poids moléculaire ou des structures réticulées accrues, préparé en chauffant un copolymère tel que revendiqué dans l'une quelconque des revendications 6, points (a) et (b), 7 à 13, 17 à 26 et 31 à 36, jusqu'à une température supérieure à 200°C.

38. Un procédé pour la préparation d'un copolymère séquencé AB tel que revendiqué dans la revendication 34, dans lequel (B) représente une séquence hydrocarbure polymérisée à diène conjugué, procédé dans lequel :
a) on polymérise en solution un monomère de monoalcényl arène et un monomère de benzocyclobutène de la formule générale II : 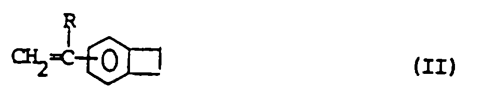 dans laquelle R représente un atome d'hydrogène ou un groupe CH₃ sous des conditions de polymérisation à une température entre -75°C et 150°C avec un initiateur à base d'organomonolithium de façon à réaliser une branche polymère vivante ALi ;
b) on met en contact ledit bras polymère vivant A-Li avec un monomère diénique conjugué de façon à former un bras polymère AB-Li ; et
c) on récupère le copolymère séquencé résultant AB.

39. Un procédé pour la préparation d'un copolymère séquencé ABA tel que revendiqué dans la revendication 35, dans lequel "B" représente une séquence hydrocarbone polymérisée à diène conjugué, procédé dans lequel :
a) on polymérise en solution un monomère de monoalcényl arène et un monomère de benzocyclobutène de la formule générale II : 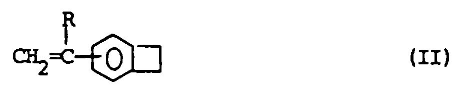 dans laquelle R représente un atome d'hydrogène ou un groupe CH₃ sous des conditions de polymérisation à une température entre -75°C et 150°C avec un initiateur à base d'organomonolithium de façon à réaliser une branche polymère vivante ALi ;
b) on met en contact ledit bras polymère vivant A-Li avec un monomère diénique conjugué de façon à former un bras polymère AB-Li ;
c) on met en contact ledit bras polymère vivant AB-Li avec un monomère de monoalcényl arène et un monomère de benzocyclobutène supplémentaires, de façon à y former un bras polymère ABALi ; et
d) on récupère le copolymère séquencé résultant ABA.

40. Un procédé pour la préparation d'un copolymère séquencé (AB)ₘ-Y- tel que revendiqué dans la revendication 16, dans lequel "B" représente une séquence hydrocarbonée polymérisée à diène conjugué, procédé dans lequel :
a) on polymérise en solution un monomère de monoalcényl arène et un monomère de benzocyclobutène de la formule générale II : 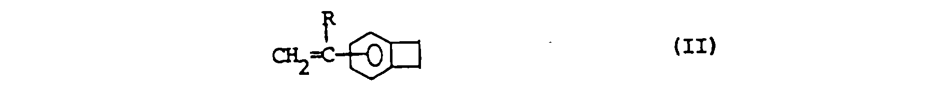 dans laquelle R représente un atome d'hydrogène ou un groupe CH₃ sous des conditions de polymérisation à une température entre -75°C et 150°C avec un initiateur à base d'organomonolithium de façon à réaliser une branche polymère vivante ALi ;
b) on met en contact ledit bras polymère vivant A-Li avec un monomère diénique conjugué de façon à former un bras polymère AB-Li ; et
c) on met en contact ladite branche polymère vivante AB-Li avec un agent de couplage de façon à y former le copolymère séquencé (AB-)-ₘ-Y- dans lequel Y est le résidu d'un agent de couplage et "m" se situe entre 1 et 30.

41. Un procédé pour la préparation d'un copolymère séquencé AB tel que revendiqué dans la revendication 34, dans lequel "B" représente une séquence polymère à diène conjugué, complètement hydrogéné, procédé dans lequel :
a) on polymérise en solution un monomère de monoalcényl arène et un monomère de benzocyclobutène de la formule générale II : 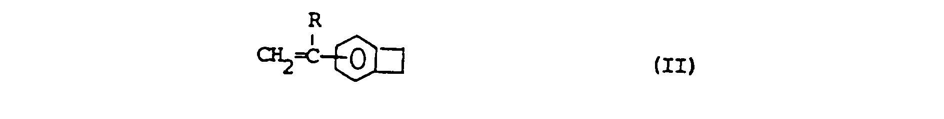 dans laquelle R représente un atome d'hydrogène ou un groupe CH₃ sous des conditions de polymérisation à une température entre -75°C et 150°C avec un initiateur à base d'organomonolithium de façon à réaliser une branche polymère vivante ALi ;
b) on met en contact ledit bras polymère vivant A-Li avec un monomère diénique conjugué de façon à former un bras polymère AB'-Li ;
c) on hydrogène de façon sélective le polymère AB'-Li de façon à y former le polymère AB-Li ; et
d) on récupère le copolymère séquencé résultant AB.

42. Un procédé pour la préparation d'un copolymère séquencé ABA tel que revendiqué dans la revendication 35, dans lequel "B" représente une séquence polymère à base de diène conjugué, complètement hydrogéné, procédé dans lequel :
a) on polymérise en solution un monomère de monoalcényl arène et un monomère de benzocyclobutène de la formule générale II : 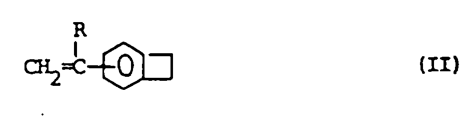 dans laquelle R représente un atome d'hydrogène ou un groupe CH₃ sous des conditions de polymérisation à une température entre -75°C et 150°C avec un initiateur à base d'organomonolithium de façon à réaliser une branche polymère vivante ALi ;
b) on met en contact ledit bras polymère vivant A-Li avec un monomère diénique conjugué de façon à former un bras polymère AB'-Li ;
c) on met en contact ladite branche polymère vivante AB'Li avec un monomère de monoalcényl arène et un monomère de benzocyclobutène, de façon à former un polymère AB'ALi ;
d) on hydrogène de façon sélective le polymère AB'A-Li de façon à former le polymère ABA-Li ; et
e) on récupère le copolymère séquencé résultant ABA.

43. Un procédé pour la préparation d'un copolymère séquencé (AB)ₘ-Y- tel que revendiqué dans la revendication 36, dans lequel "B" représente une séquence polymère à diène conjugué complètement hydrogéné, procédé dans lequel :
a) on polymérise en solution un monomère de monoalcénylarène et un monomère de benzocyclobutène de la formule générale II : 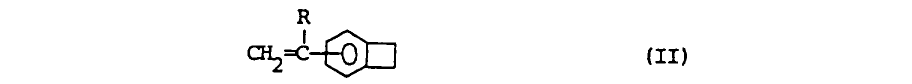 dans laquelle R représente un atome d'hydrogène ou un groupe CH₃ sous des conditions de polymérisation à une température entre -75°C et 151°C avec un initiateur à base d'organomonolithium de façon à réaliser une branche polymère vivante ALi ;
b) on met en contact ledit bras polymère vivant A-Li avec un monomère diénique conjugué de façon à former un bras polymère AB'-Li ;
c) on met en contact ladite branche polymère vivante AB'-Li avec un agent de couplage de façon à former le copolymère séquencé -(-AB'-)-ₘ-Y- dans lequel Y est le résidu de l'agent de couplage et "m" se situe entre 1 et 30 ; et
d) on hydrogène de façon sélective ledit copolymère séquencé (AB'-)-ₘ-Y de façon à former le polymère (AB-)-ₘ-Y.

44. Un procédé tel que revendiqué dans l'une quelconque des revendications 41 à 43, dans lequel ladite hydrogénation sélective est réalisée avec un catalyseur à base d'octoate de nickel/triéthylaluminium à une température inférieure à 150°C.

45. Le 4-(3-butényl)benzocyclobutène.

46. Un procédé pour la préparation du composé tel que revendiqué dans la revendication 45, procédé dans lequel on fait réagir un 4-halo-méthylbenzocyclobutène avec du magnésium métallique et on fait réagir le 4-halomagnésiuméthylbenzocyclobutène ainsi formé avec un halogénure d'allyle.

47. Un procédé tel que revendiqué dans la revendication 46, dans lequel le 4-halo-méthylbenzocyclobutène est du 4-chloro-méthylbenzocyclobutène et l'halogénure d'allyle est du bromure d'allyle.
